# EUROPEAN PATENT APPLICATION

(11) **EP 4 772 886 A2**
(43) Date of publication of application: **08.07.2026**
(21) Application number: 26179038.0
(22) Date of filing: 27.11.2023
(51) Int. Cl.: G01N 35/04

(54) **TUBE SUPPLY APPARATUS, TUBE TRANSPORT APPARATUS, AND PRODUCTION AUTOMATION SYSTEM COMPRISING TUBE SUPPLY APPARATUS AND TUBE TRANSPORT APPARATUS**

(30) Priority: 08.12.2022 KR 20220170784; 27.01.2023 KR 20230010895
(62) Divisional of application: 23900989.7
(71) Applicant: Seegene, Inc., Seoul 05548 (KR)
(72) Inventor: JEONG, Won Seok, 08719 Seoul (KR); HAN, Yoo Jun, 14044 Anyang-si, Gyeonggi-do (KR); LIM, Hyun Jin, 06927 Seoul (KR)
(74) Representative: Beck & Rössig European Patent Attorneys

(57) **Abstract**

A tube transferring apparatus (1000) comprises a conveyor (110) feeding a tube (10, 15, 20); a transfer structure (200) including a transfer member (260) positioned adjacent to an output section of the conveyor, the transfer member including a step portion (263) that is formed in an inside of the transfer member, the transfer member supporting the tube released from the output section of the conveyor through the step portion; a rotation structure (300) positioned under the transfer structure (200), the rotation structure including a tube holding plate (310) where a through-hole (315) is formed; and a controller (400) configured to control the transfer structure such that the tube released from the output section of the conveyor is provided to the through-hole (315) of the tube holding plate by moving down the released tube while being supported through the step portion (263).

## Description

### TECHNICAL FIELD

The present invention relates to a tube transferring apparatus including a transfer structure and a rotation structure.

### BACKGROUND ART

In an automated production system, an apparatus for transferring a tube may transfer a tube of a half-finished product state to a plurality of process devices through the conveyor so that the tube is produced in a complete product.

For example, after a solution or powder is contained in the tube, a first capping process may be performed to cap the tube. After the first capping process is performed, the tube may be provided to an inlet of a tube feeding apparatus of a side-belt type. Here, a left belt and a right belt of tube feeding apparatus of a side-belt type may be in contact with both lateral portions of the tube, and the tube may be fed from the inlet to an outlet of the tube feeding apparatus by the left and right belts. However, in this process, due to a friction between the tube and the belts, the belts may be worn, and particles may be generated. In such a case, jamming of the tubes may occur due to the particles, and the tube may be broken or a failure of the tube feeding apparatus may be caused.

In addition, after a solution or powder is contained in the tube, a first capping process may be performed to cap the tube. After the first capping process is performed, the tube may be provided to a tube feeding apparatus of a side-belt type, and the tube may move to an outlet of the tube feeding apparatus. The tube released from the outlet of the tube feeding apparatus may be provided in a groove of a turntable rotated by an index motor to perform a second capping process. In this case, the outlet of the tube feeding apparatus and the groove of the turntable may be located at the same level. The tube provided in the groove of the turntable may be moved in a clockwise direction or a counterclockwise direction, and a guide member surrounding an outer portion of the turntable may be positioned so that the tube provided in the groove of the turntable is not released to the outside while being moved. In other words, while the tubes are continuously pushed in a direction from the tube feeding apparatus toward the turntable by the side belts of the tube feeding apparatus, the turntable is rotated, and a tube, which is in contact with the turntable, among the tubes may be provided in the groove of the turntable. In this process, while the turntable is rotated, due to a friction between the turntable and the tube, the tube may be worn, and particles may be generated. In such a case, a jamming phenomenon of the tubes may occur due to the particles, and the tube may be broken or a failure of the turntable may be caused. In addition, by disposing the guide member surrounding the outer portion of the turntable, a manufacturing cost may be increased.

### DETAILED DESCRIPTION OF THE INVENTION

### TECHNICAL PROBLEM

The object of the present invention is to provide a new tube transferring apparatus including a transfer structure and a rotation structure.

### SOLUTION TO PROBLEM

In order to achieve the object described above, a tube transferring apparatus according to exemplary embodiments of the invention includes a conveyer, a transfer structure, a rotation structure, and a controller. The conveyer feeds a tube. The transfer structure includes a transfer member positioned adjacent to an output section of the conveyer, and includes a step portion that is formed in an inside of the transfer member. The transfer member supports the tube released from the output section of the conveyer through the step portion. The rotation structure is positioned under the transfer structure, and includes a tube holding plate where a through-hole is formed. The controller is configured to control the transfer structure such that the tube released from the output section of the conveyer is provided to the through-hole of the tube holding plate by moving downward the released tube while being supported through the step portion.

In exemplary embodiments, the tube may include a protrusion formed in a side surface of the tube.

In exemplary embodiments, the protrusion of the tube may be supported on the step portion of the transfer member.

In exemplary embodiments, a recess portion may be formed in the transfer member, and may be recessed from one side surface into the inside of the transfer member. The recess portion of the transfer member may face the output section of the conveyer, and the step portion of the transfer member may be formed at the recess portion of the transfer member.

In exemplary embodiments, a shape of the recess portion may correspond to a shape of an outer portion of the tube.

In exemplary embodiments, the transfer member may include a first transfer panel and a second transfer panel. The first transfer panel may include a first step portion formed in an inside surface of the first transfer panel, and the second transfer panel may include a second step portion formed in an inside surface of the second transfer panel. The first and second step portions may be defined as the step portion of the transfer member.

In exemplary embodiments, the controller may be configured to control the transfer structure such that (i) the first and second transfer panels are spaced apart by a first distance so as to support the tube by using the transfer member while the transfer structure moves downward the tube, after the tube released from the output section of the conveyer is provided to the transfer member and (ii) the first and second transfer panels are spaced apart by a second distance that is greater than the first distance along a transverse direction so as to release the tube provided to the transfer member into the through-hole of the tube holding plate, after the transfer structure moves downward the tube.

In exemplary embodiments, an opening penetrated from an outside surface into the first step portion may be formed in the first transfer panel. The apparatus may further include a detection sensor. The detection sensor may be positioned in the opening of the first transfer panel, and may sense a presence or an absence of the tube positioned in the step portion of the transfer member.

In exemplary embodiments, the transfer structure may further include a support member positioned on the transfer member and an elastic member positioned on the support member.

In exemplary embodiments, the transfer structure may further include a transfer plate. The transfer plate may be spaced apart from the support member on the elastic member by a predetermined distance, and may be movable up and down on the transfer member. The elastic member may maintain the predetermined distance between the support member and the transfer plate.

In exemplary embodiments, after the transfer member may support the tube released from the output section of the conveyer through the step portion, a lower surface of the support member may press an upper surface of the tube by moving downward the transfer plate, such that the elastic member is compressed, and the predetermined distance may be decreased.

In exemplary embodiments, the transfer structure may further include a fixed body, a moving unit, a connection member, a first connection unit, a piston member, and a second connection unit. The moving unit may be movable up and down on one side surface of the fixed body. The connection member may be fixed in a first portion of a side surface of the transfer unit, and may be extended in a direction that is vertical to the side surface of the transfer unit. The first connection unit may be fixed in a lower surface of the connection member. The piston member may be positioned under the first connection unit, and may be connected to the transfer plate such that the transfer plate is movable up and down. The second connection unit may be fixed in a second portion of the side surface of the transfer unit, and may connect the moving unit and the transfer member.

In exemplary embodiments, the transfer plate may be spaced apart from the first and second connection units.

In exemplary embodiments, a lower surface of the first connection unit may face an upper surface of the transfer plate, and the transfer plate may be movable up and down on the lower surface of the connection member.

In exemplary embodiments, after the tube released from the output section of the conveyer is provided to the transfer member, the support member may be in contact with an upper surface of the tube by moving downward the transfer plate through the piston member. The moving unit may be moved downward while the support member is in contact with the upper surface of the tube, such that the tube is moved downward. The transfer member may be spaced apart from the tube after the tube is moved downward, and may be moved downward by an elastic force of the elastic member, such that the tube is provided to the through-hole of the tube holding plate.

In exemplary embodiments, the rotation structure may further include a rotation table. The rotation table may have a circular shape, and may be rotated in a plane. The tube holding plate may include first to (n)th tube holding plates, where n is an integer 2 or more, and first to (n)th through-holes may be formed in the first to (n)th tube holding plates, respectively. The first to (n)th tube holding plates may be fixed in an outer portion of the rotation table. The rotation table may be rotated such that the first to (n)th through-holes are sequentially adjacent to the output section of the conveyer.

In exemplary embodiments, the controller may be further configured to control the rotation structure such that (i) the first holding plate among the first to (n)th tube holding plates is positioned under the transfer structure and (ii) the second through-hole among the first to (n)th through-holes is positioned under the transfer structure by rotating the rotation table at a predetermined angle, after the tube released from the transfer structure is provided to the first through-hole among the first to (n)th through-holes.

In exemplary embodiments, the through-hole formed in the tube holding plate may be located in a radially outermost portion of the tube holding plate, and at least a part of the through-hole may be open to an outside.

In exemplary embodiments, a chord length of a virtual fan shape defined by a portion where the at least a part of the through-hole is open to the outside may be less than a diameter of a virtual circle defined by the through-hole. A side surface of the tube provided to the through-hole may be exposed by the portion where the at least a part of the through-hole is open to the outside.

In exemplary embodiments, the rotation structure may further include a tube support plate positioned under the tube holding plate. The tube support plate may support a lower surface of the tube provided to the through-hole of the tube holding plate.

In exemplary embodiments, the apparatus may further include a stopper. The stopper may be positioned adjacent to the output section of the conveyer, and may be operated in an open state such that the tube positioned adjacent to the output section of the conveyer is provided to an input section of the transfer structure. The stopper may be operated in a closed state such that the tube positioned adjacent to the output section of the conveyer is not provided to the input section of the transfer structure.

In exemplary embodiments, the apparatus may further include an air blower. The air blower may be positioned adjacent to the output section of the conveyer, and may blow air to the tube positioned adjacent to the output section of the conveyer.

In exemplary embodiments, the tube positioned adjacent to the output section of the conveyer may be provided to an input section of the transfer structure by the air discharged from the air blower.

In order to achieve the object of the second invention described above, a tube transferring apparatus according to exemplary embodiments of the second invention includes a conveyer, a transfer structure, a rotation structure, and a controller. The conveyer feeds a tube. The transfer structure includes a fixed body, a moving unit movable up and down on one side surface of the fixed body, a connection member fixed in a first portion of a side surface of the moving unit and extended in a direction that is vertical to the side surface of the transfer unit, a transfer member positioned adjacent to an output section of the conveyer, including a step portion that is formed in an inside of the transfer member, and supporting the tube released from the output section of the conveyer through the step portion, a transfer plate positioned on the transfer member and movable up and down on the transfer member, a support member spaced apart from a lower surface of the transfer plate by a predetermined distance, an elastic member positioned between the transfer plate and the support member and maintaining the predetermined distance between the support member and the transfer plate, the piston member connected to the transfer plate such that the transfer plate is movable up and down, a first connection unit fixed in a lower surface of the connection member, and a second connection unit fixed in a second portion of the side surface of the moving unit and connecting the moving unit and the transfer member. The rotation structure is positioned under the transfer structure, and includes a tube holding plate where a through-hole is formed. The controller is configured to control the transfer structure such that the tube released from the output section of the conveyer is provided to the through-hole of the tube holding plate by moving downward the released tube supported through the step portion.

In order to achieve other object of the second invention described above, a rotation structure according to exemplary embodiments of the second invention includes a rotation table and a tube holding plate. The rotation table has a circular shape, and is rotated in a plane. The tube holding plate is fixed in an outer portion of the rotation table, and a through-hole is formed in the tube holding plate. The through-hole formed in the tube holding plate is located in a radially outermost portion of the tube holding plate, and at least a part of the through-hole is open to an outside. A chord length of a virtual fan shape defined by a portion where the at least a part of the through-hole is open to the outside is less than a diameter of a virtual circle defined by the through-hole.

In exemplary embodiments, a side surface of the tube provided to the through-hole may be exposed by the portion where the at least a part of the through-hole is open to the outside.

In exemplary embodiments, the tube holding plate may include first to (n)th tube holding plates, where n is an integer 2 or more, and first to (n)th through-holes may be formed in the first to (n)th tube holding plates, respectively. The first to (n)th tube holding plates may be fixed in an outer portion of the rotation table. The rotation table may be rotated, such that the first to (n)th tube holding plates are rotated.

In exemplary embodiments, the rotation structure may further include a tube support plate positioned under the tube holding plate. When the tube is provided to the through-hole of the tube holding plate, the tube support plate may support a lower surface of the tube.

The present disclosure further includes an apparatus for feeding a tube with a protrusion formed on its side surface according to exemplary embodiments of the first invention includes a vibration generator and a guide rail. The vibration generator generates a vibration. The vibration generated from the vibration generator is transmitted to the guide rail, and the guide rail supports the protrusion of the tube.

In exemplary embodiments, the guide rail may transmit the vibration generated from the vibration generator to the protrusion of the tube.

In exemplary embodiments, a plurality of tubes may be provided to an input section of the guide rail, and the tubes may be fed to an output section of the guide rail by the vibration generated from the vibration generator.

In exemplary embodiments, the guide rail may include a first guide rail and a second guide rail. The first guide rail may extend in a first direction. The second guide rail may be spaced apart from the first guide rail, and may extend in the first direction.

In exemplary embodiments, the tube may be positioned at a void space between the first and second guide rails, and a part of an upper surface of each of the first and second guide rails may support the protrusion of the tube.

In exemplary embodiments, the tube may be fed in an upright state by the first and second guide rails.

In exemplary embodiments, the apparatus may further include a guider. The guider may extend in a first direction on the guide rail, and may be spaced apart from the guide rail.

In exemplary embodiments, a body of the tube may be sealed with a cap, and a lower surface of the guider may face an upper surface of the cap. The lower surface of the guider may be spaced apart from an upper surface of the tube provided to the guide rail by a predetermined distance.

In exemplary embodiments, the apparatus may further include a plate disposed between the vibration generator and the guide rail.

In exemplary embodiments, the guide rail may be coupled to the plate, and the vibration generated from the vibration generator may be transmitted to the guide rail through the plate.

In exemplary embodiments, a lower surface of the tube provided to the guide rail may be spaced apart from the plate.

In exemplary embodiments, the apparatus may further include a first air blower. The first air blower may be positioned adjacent to an input section of the guide rail, and may blow air to the tube provided to the input section of the guide rail.

In exemplary embodiments, a velocity of the tube that is fed to an output section of the guide rail by air discharged from the first air blower may be relatively faster than a velocity of the tube that is fed to the output section of the guide rail by the vibration generated from the vibration generator.

In exemplary embodiments, a body of the tube may be sealed with a cap, and the first air blower may blow air to an upper portion of the tube.

In exemplary embodiments, the apparatus may further include a second air blower. The second air blower may be positioned adjacent to an output section of the guide rail, and may blow air to the tube positioned adjacent to the output section of the guide rail. The tube may be provided to an input section of an external device by air discharged from the second air blower.

In exemplary embodiments, the apparatus may further include a controller. The controller may determine an intensity of the vibration, a frequency of the vibration, and a direction of the vibration of the vibration generator. The intensity, the frequency, and the direction of the vibration may be determined based on a weight and a shape of the tube.

In exemplary embodiments, a body of the tube may be sealed with a cap, the protrusion of the tube may be located adjacent to the cap.

In exemplary embodiments, the cap may be located higher than an upper surface of the guide rail.

In exemplary embodiments, the apparatus may further include a detection sensor. The detection sensor may be positioned adjacent to an input section of the guide rail, and may detect whether the tube is positioned at a predetermined position for more than a predetermined time. When the detection sensor detects that the tube is positioned at a predetermined position for more than a predetermined time, tubes may be stopped from being provided to an input section of the guide rail.

In order to achieve the object of the first invention described above, an apparatus for feeding a tube with a protrusion formed on its side surface according to exemplary embodiments of the first invention includes a vibration generator, a guide rail including a first guide rail and a second guide rail, and a guider. The vibration generator generates a vibration. The vibration generated from the vibration generator is transmitted to the guide rail. The guide rail supports the protrusion of the tube. The first guide rail extends in a first direction. The second guide rail is spaced apart from the first guide rail and extends in the first direction. The guider extends in the first direction on the guide rail, and be spaced apart from the guide rail.

### ADVANTAGEOUS EFFECTS OF INVENTION

As the apparatus for feeding a tube according to exemplary embodiments of the first invention includes the vibration generator and the guide rail, the apparatus for feeding a tube may feed the tube via vibration generated from the vibration generator while the protrusion of the tube is supported by the guide rail. In this case, a contact area between the guide rail and the tube is minimized, the tube may not be worn during a process of feeding the tube. Accordingly, the tube may not be damaged, and a failure of the apparatus may not occur.

In addition, since the apparatus for feeding a tube includes the guider, the tube may be prevented from jumping in the fourth direction. Accordingly, while the tube is fed through the guide rail, the apparatus may prevent the tube from being lost.

Further, since the apparatus for feeding a tube includes the first air blower, the relatively slowly fed tube may be relatively quickly fed from the input section of the guide rail to the output section of the guide rail. In addition, since the apparatus includes the second air blower, the relatively slowly fed tube may be relatively quickly fed to the input section of the external device. Accordingly, a processing time for feeding the tube may be relatively shortened.

As the tube transferring apparatus according to exemplary embodiments of the second invention includes the controller and the transfer structure, the tube transferring apparatus may provide the tube to the through-hole of the tube holding plate by moving downward the tube released from the output section of the conveyor. In this case, since the rotating tube holding plate and the tube positioned at the output section of the conveyor are not in contact with each other, the tube may not be worn. Accordingly, as particles are not generated due to the wear of the tube 10, a jamming phenomenon of the tube and a failure of the rotation structure may not occur.

In addition, as the tube transferring apparatus may include the controller and the rotation structure, the tube holding plate may be manufactured such that a length of the chord of the virtual fan shape defined by the portion where at least a part of the through-hole is opened to the outside is shorter than the diameter of the virtual circle defined by the through-hole. In this case, since the tube provided in the through-hole of the tube holding plate is not released to the outside by a centrifugal force even when the rotation table rotates, a guide member surrounding an outer portion of the tube holding plate may not be installed. Accordingly, a cost of the tube transferring apparatus may be relatively reduced.

Further, the tube holding plate may include the portion where at least a part of the through-hole is opened to the outside. Accordingly, even if the highest point of the solution contained in the tube is overlapped with the side surface of the tube holding plate, the vision inspection device may detect the highest point of the solution through the portion where at least a part of the through-hole is opened to the outside.

However, the effects of the first and second inventions are not limited to the effects described above, and may be expanded in various ways without departing from the spirit and scope of the first and second inventions.

### BRIEF DESCRIPTION OF THE DRAWINGS

FIG. 1 is a perspective view illustrating an apparatus for feeding a tube according to exemplary embodiments of a first invention.
FIG. 2 is a top view illustrating the apparatus for feeding the tube of FIG. 1.
FIG. 3 is a diagram for describing a joint included in the apparatus for feeding the tube of FIG. 1.
FIG. 4 is a block diagram for describing a controller included in the apparatus for feeding the tube of FIG. 1.
FIG. 5 is a diagram for describing a plate, a guide rail, and a guider included in the apparatus for feeding the tube of FIG. 1.
FIGS. 6 and 7 are diagrams illustrating a shape where a tube is fed through the plate, the guide rail, and the guider of FIG. 5.
FIGS. 8, 9, and 10 are diagrams illustrating a tube transferring apparatus according to exemplary embodiments of a second invention.
FIGS. 11 and 12 are views for explaining a tube holding plate and a tube supporting plate included in the tube transferring apparatus of FIG. 8.
FIG. 13 is a block diagram for describing a controller included in the tube transferring apparatus of FIG. 8.
FIGS. 14, 15, and 16 are partial enlarged views illustrating a transferring structure and the tube holding plate included in the tube transferring apparatus of FIG. 8.
FIG. 17 is an exploded perspective view for describing the transferring structure of FIG. 14.
FIG. 18 is a diagram for describing a transfer member included in the transferring structure of FIG. 14.
FIGS. 19 to 21 are schematic diagrams illustrating a method of transferring a tube by the tube transferring apparatus according to exemplary embodiments of the second invention.

### MODE FOR THE INVENTION

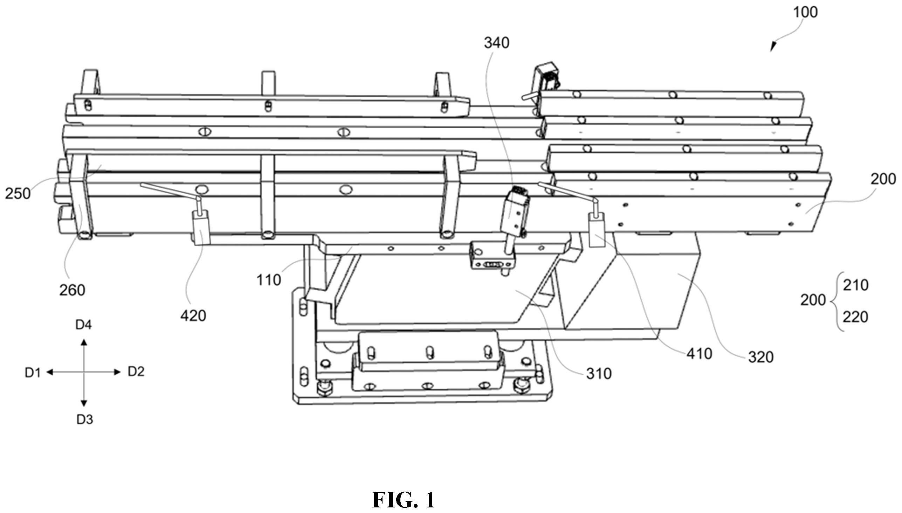

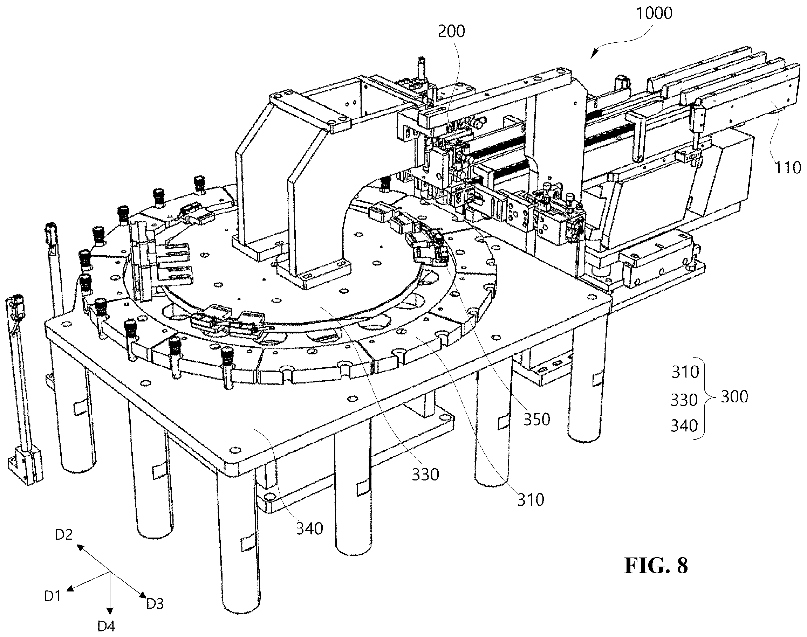

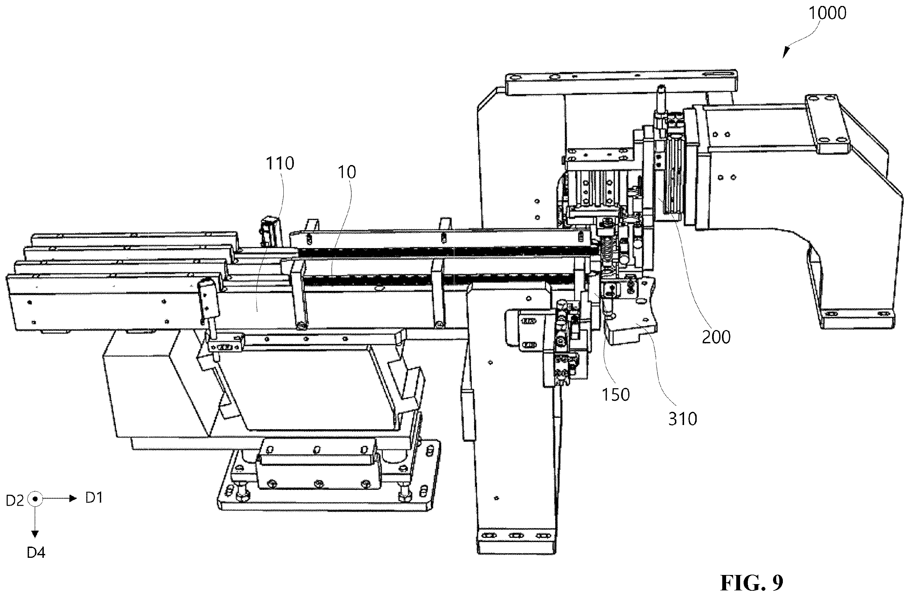

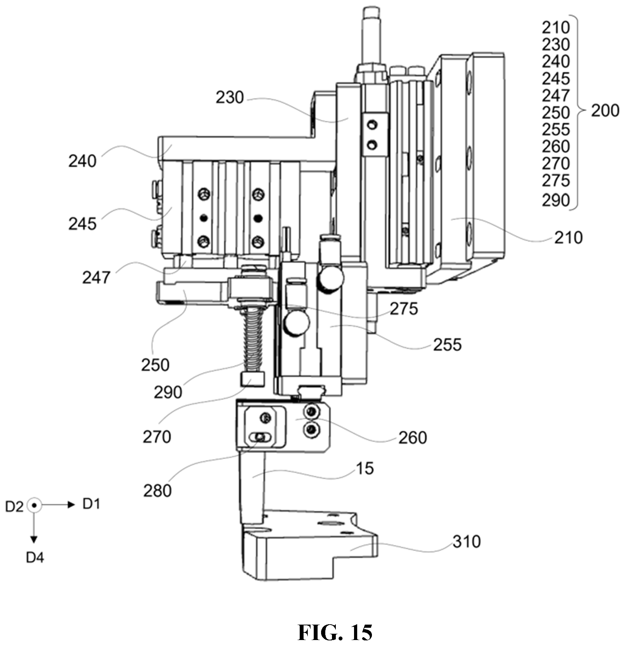

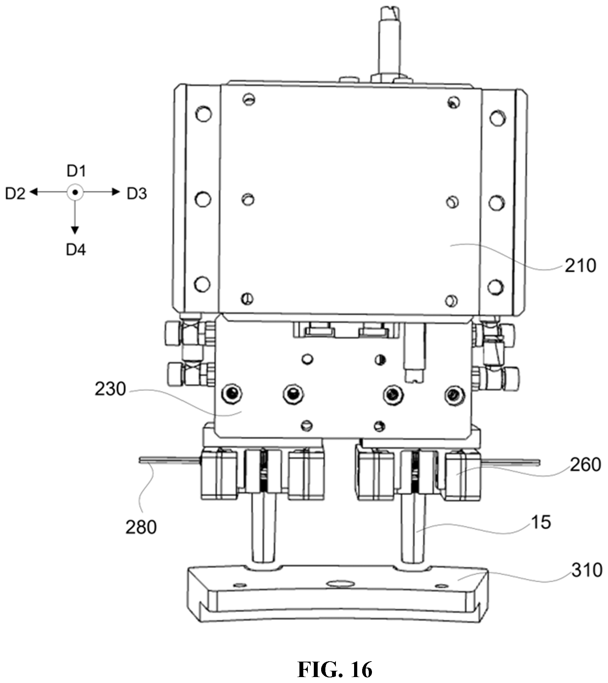

A first invention corresponds to FIGS. 1 to 7, and a second invention corresponds to FIGS. 8 to 21. Hereinafter, an apparatus for feeding a tube, a tube transferring apparatus, and a rotation structure according to exemplary embodiments of the first and second inventions will be described in detail with reference to the accompanying drawings. In the accompanying drawings, reference numerals used in the first invention and reference numerals used in the second invention may be the same, but they may be different components. That is, the first invention should be interpreted only within FIGS. 1 to 7, and the second invention should be interpreted only within FIGS. 8 to 21.

In present specification, specific structural and functional descriptions are merely exemplified for the purpose of explaining embodiments of the first and second inventions, and the embodiments of the first and second inventions may be implemented in various forms and are not construed as being limited to the embodiments described in the present specification, but should be understood to include all modifications, equivalents, and substitutes included in the spirit and technical scope of the first and second inventions. When a component is described as being "connected" or "in contact with" another component, it should be understood that it may be directly connected or in contact with the other component, but another component may exist in between. In addition, when a component is described as being "directly connected" or "in direct contact with" another component, it may be understood that there is no another component in between. Other expressions describing the relationship between components, such as "between" and "directly between" or "adjacent to" and "directly adjacent to", may be interpreted in the same way.

The terminology used in the first and second inventions is for the purpose of describing embodiments only and is not intended to be limiting of the first and second inventions. The singular expression includes the plural expression unless the context clearly indicates otherwise. In the present specification, it should be understood that the terms "comprise," "include," or "have" are intended to specify the presence of a feature, number, step, operation, component, part, or combination thereof, but do not exclude in advance the possibility of the presence or addition of one or more other features, numbers, steps, operations, components, parts, or combinations thereof. Unless otherwise defined, all terms used herein, including technical or scientific terms, have the same meaning as commonly understood by one of ordinary skill in the art to which this first and second inventions belong.

Terms defined in commonly used dictionaries should be interpreted as having a meaning consistent with their meaning in the context of the relevant art, and will not be interpreted in an idealized or overly formal sense unless expressly defined in the present specification.

The terms first, second, and third may be used to describe various components, but these components are not limited by the terms. The terms are used for the purpose of distinguishing one component from another. For example, without departing from the scope of the first and second inventions, the first component may be referred to as the second or third component, and similarly, the second or third component may be referred to interchangeably.

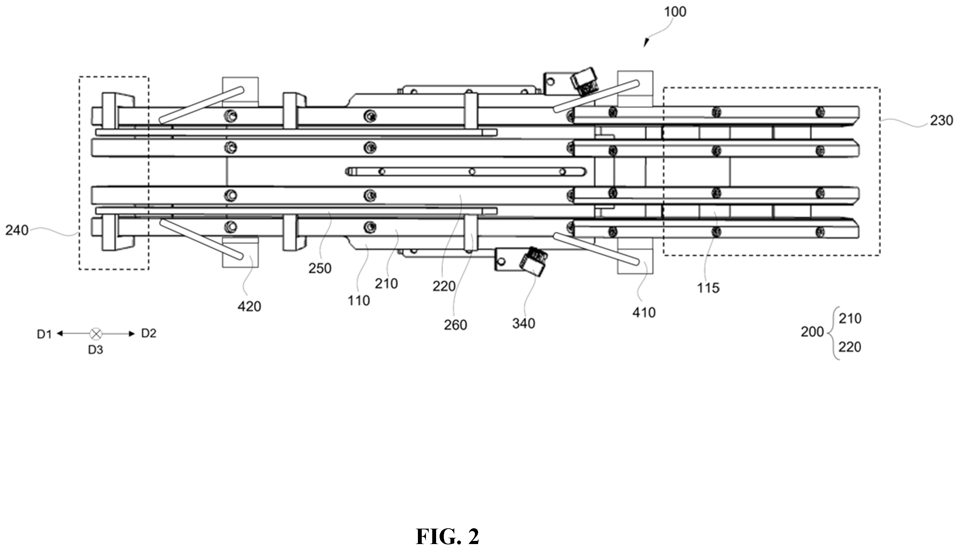

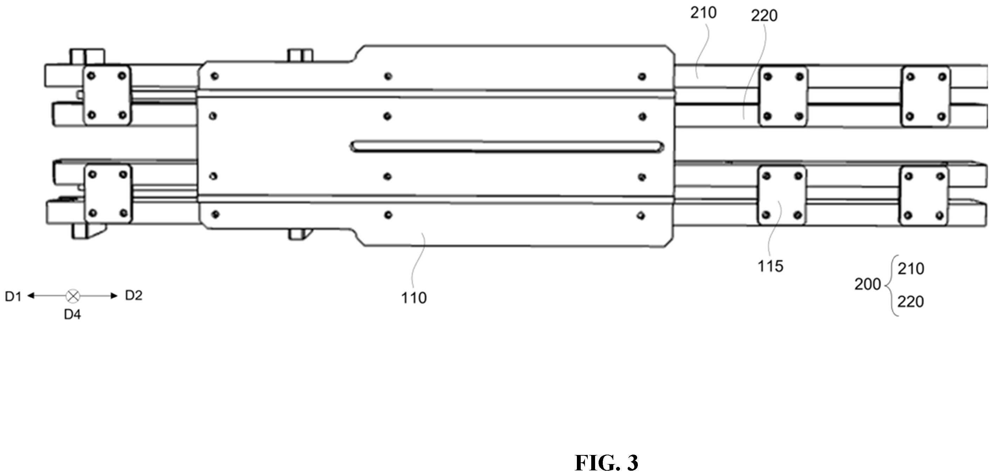

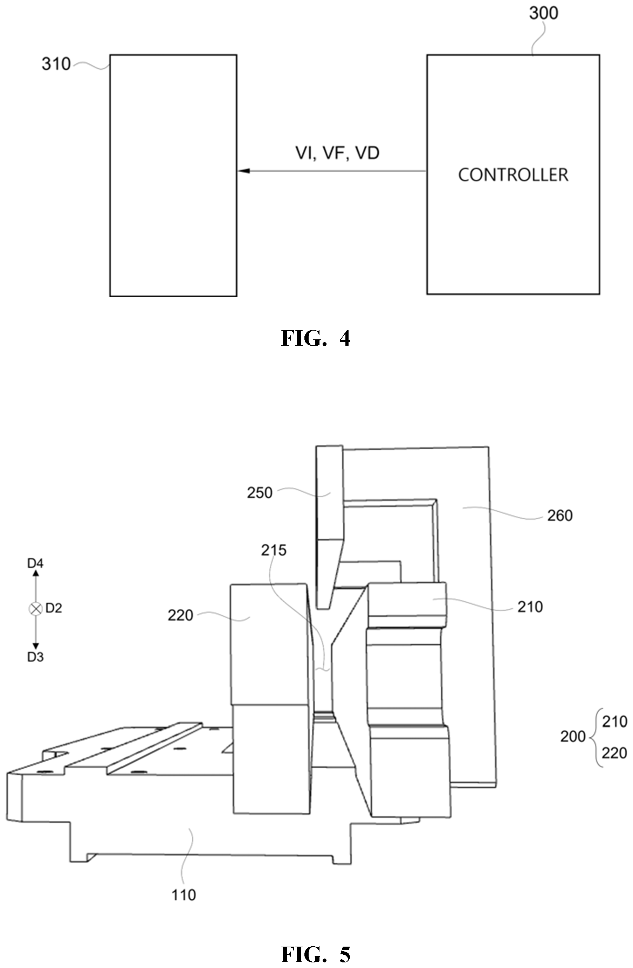

FIG. 1 is a perspective view illustrating an apparatus for feeding a tube according to exemplary embodiments of a first invention, and FIG. 2 is a top view illustrating the apparatus for feeding the tube of FIG. 1. FIG. 3 is a diagram for describing a joint included in the apparatus for feeding the tube of FIG. 1, and FIG. 4 is a block diagram for describing a controller included in the apparatus for feeding the tube of FIG. 1.

Referring to FIGS. 1 to 4, an apparatus for feeding a tube (refer to as 'apparatus 100' hereinafter) may include a plate 110, a joint 115, a guide rail 200, a guider 250, a connector 260, a controller 300, a vibration generator 310, a weight balancer 320, a detection sensor 340, a first air blower 410, a second air blower 420, etc. Here, the guide rail 200 may include a first guide rail 210 and a second guide rail 220. In addition, a right portion of the guide rail 200 may be defined as an input section 230, and a left portion of the guide rail 200 may be defined as an output section 240.

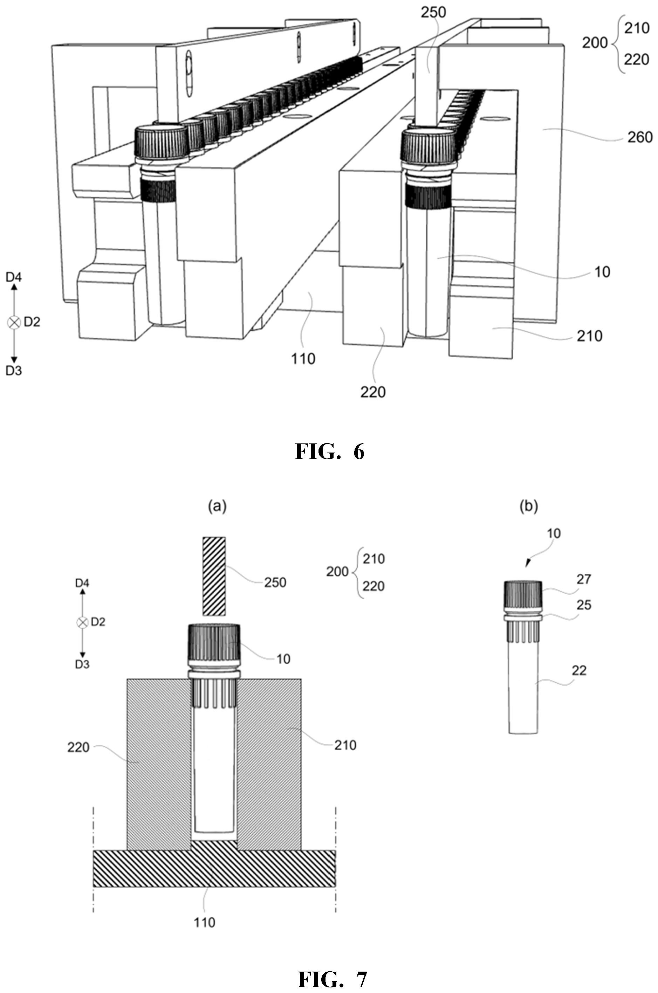

In exemplary embodiments, the apparatus 100 may feed a tube 10 in a first direction D1. The tube 10 may include a cylindrical body 22, and a protrusion 25 may be formed on a side surface of a body 22 (e.g., a neck of the tube). For example, the protrusion 25 may be located above a middle height of the tube 10 when the tube is in an upright state, and the protrusion 25 may have a ring shape protruding laterally from the side surface of the tube 10. In addition, the tube 10 may further include a cap 27, and the body 22 may be sealed with the cap 27. Here, the protrusion 25 may be positioned adjacent to the cap 27. Further, a liquid solution or a solid powder may be contained in the body 22 (refer to FIG. 7B).

The vibration generator 310 may be provided. The vibration generator 310 may generate vibrations. For example, a leaf spring and an electromagnet for generating the vibrations, a vibration transmitter for transmitting the vibrations, etc may be disposed in an inside the vibration generator 310. The vibration generator 310 may generate the vibrations in left-right directions (e.g., a first direction D1 and a second direction D2) by using the leaf spring, the electromagnet, etc, and the vibration transmitter may transmit the vibrations to the plate 110.

However, although the vibration generator 310 of the first invention has been described as including the leaf spring, the electromagnet, and the vibration transmitter, a configuration of the first invention is not limited thereto. For example, the vibration generator 310 may include various configurations capable of transmitting the vibrations to the plate 110 by generating the vibrations.

The weight balancer 320 may be positioned spaced apart from the vibration generator 310 in a second direction D2. The weight balancer 320 may be overlapped with the input section 230 of the guide rail 200. As the weight balancer 320 is positioned at the input section 230 of the apparatus 100, the weight balancer 320 may stably maintain a center of gravity of the apparatus 100.

The controller 300 may be electrically connected to the vibration generator 310. The controller 300 may determine an intensity VI of the vibration generated from the vibration generator 310, a frequency VF of the vibration, and a direction VD of the vibration. For example, a user of the apparatus 100 may input the intensity VI of the vibration, the frequency VF of the vibration, and the direction VD of the vibration generated from the vibration generator 310 to the controller 300. Here, the intensity VI, the frequency VF, and the direction VD of the vibration may be determined based on a weight and a shape of the tube 10. In other words, the user of the apparatus 100 may determine the intensity VI, the frequency VF, and the direction VD of the vibration based on the weight and the shape of the tube 10, and the user may input a value of the determined intensity VI, a value of the determined frequency VF, and a value of the determined direction VD to the controller 300. The vibration generator 310 may generate the vibration by receiving the determined values. That is, the tube 10 may be fed from the input section 230 to the output section 240 of the guide rail 200 by the vibration generated from the vibration generator 310.

The plate 110 may be positioned on the vibration generator 310. In other words, the plate 110 may be disposed between the vibration generator 310 and the guide rail 200, and the plate 110 may be connected to the vibration generator 310 to transmit the vibration generated from the vibration generator 310 to the guide rail 200. That is, the vibration generated from the vibration generator 310 may be transmitted to the guide rail 200 through the plate 110. The plate 110 may include a metal, an alloy, or metal nitride. For example, the plate 110 may include metallic materials such as gold (Au), silver (Ag), aluminum (Al), iron (Fe), zinc (Zn), lead (Pb), tungsten (W), copper (Cu), platinum (Pt), nickel (Ni), titanium (Ti), palladium (Pd), magnesium (Mg), calcium (Ca), lithium (Li), chromium (Cr), tantalum (Ta), molybdenum (Mo), scandium (Sc), neodymium (Nd), iridium (Ir), etc, the alloys such as aluminum-containing alloy, silver-containing alloy, copper-containing alloy, molybdenum-containing alloy, etc, and the metal nitrides such as aluminum nitride (AlNₓ), tungsten nitride (WNₓ), titanium nitride (TiNₓ), chromium nitride (CrNₓ), tantalum nitride (TaNₓ), etc.

The guide rail 200 may be positioned on the plate 110, and the guide rail 200 may be supported by the plate 110. The guide rail 200 may be connected to the plate 110 to receive the vibration generated from the vibration generator 310. The guide rail 200 may extend in the first direction D1 or the second direction D2. An upper surface of the guide rail 200 may be substantially parallel to an upper surface of the plate 110. In exemplary embodiments, the guide rail 200 may support the protrusion 25 of the tube 10, and the vibration may be transmitted to the protrusion 25 of the tube 10 through the guide rail 200. In addition, a plurality of tubes 10 may be provided to the input section 230 of the guide rail 200, and the tubes 10 may be fed to the output section 240 of the guide rail 200 by the vibration transmitted to the guide rail 200. Further, while the tubes 10 provided to the input section 230 of the guide rail 200 are fed to the output section 240 of the guide rail 200 by the vibration, a lower surface of each of the tubes 10 may be spaced apart from the upper surface of the plate 110. Alternatively, if the protrusion 25 (refer to FIG. 7B) is not formed on the tube 10, the guide rail 200 may support the lower surface of a cap 27 of the tube 10. The guide rail 200 may include a plastic such as acetal, mono cast nylon, polyether ether ketone (PEEK), polyacrylether ketone (PAEK), polyether imide (PEI), or polyether sulfone (PES), etc. In exemplary embodiments, the guide rail 200 may be manufactured using the acetal. For example, since the acetal has a relatively low friction, the tube 10 may slide relatively easily. A detailed description of a structure of the guide rail 200 will be described below.

The joint 115 may be positioned on a lower surface of the guide rail 200. The joint 115 may support the guide rail 200 and may fix the first guide rail 210 and the second guide rail 220. In exemplary embodiments, the joint 115 may be respectively positioned at the input section 230 and the output section 240 of the guide rail 200, and the plate 110 may be positioned between the joints 115. For example, the joint 115 may be manufactured using the same material as the plate 110.

The guider 250 may be positioned on the guide rail 200, and the guider 250 may be spaced apart from the guide rail 200. The guider 250 may extend in the first direction D1 or the second direction D2, and the guider 250 and the guide rail 200 may be substantially parallel. In exemplary embodiments, the guider 250 may overlap (or face) an upper surface of the tube 10 (or an upper surface of the cap 27) provided on the guide rail 200 in an up-down direction (e.g., a third direction D3 or a fourth direction D4), and a lower surface of the guider 250 may be spaced apart from the upper surface of the tube 10 provided on the guide rail 200 by a predetermined distance. Here, the third direction D3 may correspond to a direction from the guide rail 200 toward the vibration generator 310, and the fourth direction D4 may correspond to a direction opposite to the third direction D3. In addition, while the tubes 10 provided to the input section 230 of the guide rail 200 are fed to the output section 240 of the guide rail 200 through the vibration, the guider 250 spaced apart from the upper surfaces of the tubes 10 by the predetermined distance may guide the tubes 10 so that the tubes 10 are not bounced in the fourth direction D4 and lost to an outside of the guide rail 200 due to the vibration (or air of the first air blower 410). For example, the guider 250 may be manufactured using the same material as the plate 110.

The connector 260 may be positioned adjacent to the guider 250 and the guide rail 200. To fix the guider 250 on the upper surface of the guide rail 200, a first end of the connector 260 may be connected to the guider 250, and a second end of the connector 260 may be connected to a side surface of the guide rail 200. For example, the connector 260 may be manufactured using the same material as the guider 250.

The first air blower 410 may be positioned adjacent to the input section 230 of the guide rail 200. In other words, the first air blower 410 may be fixed to the side surface of the guide rail 200, and the first air blower 410 may blow air to the tube 10 provided at the input section 230 of the guide rail 200. In exemplary embodiments, when the tube 10 provided at the input section 230 of the guide rail 200 is overlapped with the guider 250 via the input section 230, the tube 10 may be fed to the output section 240 of the guide rail 200 at a relatively faster speed by the air discharged from the first air blower 410 than a speed where the tube is fed by the vibration. In addition, the first air blower 410 may blow the air to the cap 27 (or an upper portion) of the tube 10. For example, when a relatively small number of tubes 10 are fed to the input section 230 of the guide rail 200, the tubes 10 may vibrate in place or be fed relatively slowly. In this case, when the relatively slowly fed tube 10 is overlapped with the guider 250, the first air blower 410 discharges the air to the cap 27 of the relatively slowly fed tube 10, so that the tube 10 may be fed relatively quickly.

The second air blower 420 may be positioned adjacent to the output section 240 of the guide rail 200. In other words, the second air blower 420 may be fixed to the side surface of the guide rail 200, and the second air blower 420 may blow air to the tube 10 positioned adjacent to the output section 240 of the guide rail 200. In exemplary embodiments, when the tube 10 provided at the input section 230 of the guide rail 200 overlaps with the output section 240 of the guide rail 200 via the input section 230, the tube 10 may be provided to an input section of an external device by the air discharged from the second air blower 420. Here, the external device may be positioned adjacent to the apparatus 100, and the output section 240 of the guide rail 200 and an input section of the external device may face each other. For example, the tube 10 positioned at the output section 240 of the guide rail 200 may vibrate in place or be fed relatively slowly. In this case, when the relatively slowly fed tube 10 is overlapped with the output section 240, the second air blower 420 discharges the air to the cap 27 of the relatively slowly fed tube 10, so that the tube 10 may be fed relatively quickly to the input section of the external device.

The detection sensor 340 may be positioned adjacent to the input section 230 of the guide rail 200 and may detect whether the tube 10 is located at a predetermined position for a predetermined time or more. Here, the predetermined position may be between the input section 230 and the output section 240. When the detection sensor 340 detects that the tube 10 is located at the predetermined position for the predetermined time or more, providing the tube 10 to the input section 230 of the guide rail 200 may be suspended. Alternatively, a position of the detection sensor 340 may be changed to adjust the number of fully loaded tubes 10. For example, in order to relatively reduce the number of fully loaded tubes 10, the detection sensor 340 may be positioned closer to the output section 240 of the guide rail 200. The detection sensor 340 may be a laser detection sensor that detects presence or absence of the tube 10 using a laser.

FIG. 5 is a diagram for describing a plate, a guide rail, and a guider included in the apparatus for feeding the tube of FIG. 1 and FIGS. 6 and 7 are diagrams illustrating a shape where a tube is fed through the plate, the guide rail, and the guider of FIG. 5.

Referring to FIGS. 1 and 5 to 7, as described above, the guide rail 200 may include the first guide rail 210 and the second guide rail 220.

The first guide rail 210 may extend in the first direction D1 or the second direction D2, and the second guide rail 220 may extend in the first direction D1 or the second direction D2 while being spaced apart from the first guide rail 210. In addition, upper surfaces of the first and second guide rails 210 and 220 and the lower surface of the guider 250 may face each other and may be spaced apart by a predetermined distance.

A void space 215 may be defined by the first and second guide rails 210 and 220 and the guider 250. In other words, the tube 10 may be fed into the void space 215 between the first and second guide rails 210 and 220. That is, the tube 10 may be positioned in the void space 215 between the first and second guide rails 210 and 220.

In exemplary embodiments, a portion of the upper surface of each of the first and second guide rails 210 and 220 may support the protrusion 25 of the tube 10. That is, the cap 27 of the tube 10 may be positioned above the upper surfaces of the first and second guide rails 210 and 220.

In addition, in order for the vibration generated from the vibration generator 310 to be easily transmitted to the tube 10, the lower surface of the tube 10 may be spaced apart from the upper surface of the plate 110. That is, the tube 10 may be supported only by the first and second guide rails 210 and 220. For example, a relatively small amount of a solution may be contained in the tube 10, and when the vibration is transmitted to the tube 10 through a contact between the tube 10 and the upper surface of the plate 110, a portion of the solution contained in the tube 10 may adhere to an inner wall or the cap 27 of the tube 10. In such a case, when a user removes the cap 27 of the tube 10, a relatively large amount of the solution may be lost compared to a total volume of the solution. Thus, the tube 10 should be fed in a state spaced apart from the upper surface of the plate 110.

Further, the tube 10 may be fed in an upright state by the first and second guide rails 210 and 220. For example, a relatively small amount of the solution may be contained in the tube 10, and when the tube 10 is fed in a lying state, a portion of the solution contained in the tube 10 may adhere to the inner wall or the cap 27 of the tube 10. In such a case, when a user removes the cap 27 of the tube 10, a relatively large amount of the solution may be lost compared to the total volume of the liquid. Thus, the tube 10 should be fed in an upright state.

As the apparatus 100 according to exemplary embodiments of the first invention includes the vibration generator 310 and the guide rail 200, the apparatus 100 may feed the tube 10 via vibration generated from the vibration generator 310 while the protrusion 25 of the tube 10 is supported by the guide rail 200. In this case, a contact area between the guide rail 200 and the tube 10 is minimized, the tube 10 may not be worn during a process of feeding the tube 10. Accordingly, the tube 10 may not be damaged, and a failure of the apparatus 100 may not occur.

In addition, since the apparatus 100 includes the guider 250, the tube 10 may be prevented from jumping in the fourth direction D4. Accordingly, while the tube 10 is fed through the guide rail 200, the apparatus 100 may prevent the tube 10 from being lost.

Further, since the apparatus 100 includes the first air blower 410, the relatively slowly fed tube 10 may be relatively quickly fed from the input section 230 of the guide rail 200 to the output section 240 of the guide rail 200. In addition, since the apparatus 100 includes the second air blower 420, the relatively slowly fed tube 10 may be relatively quickly fed to the input section of the external device. Accordingly, a processing time for feeding the tube 10 may be relatively shortened.

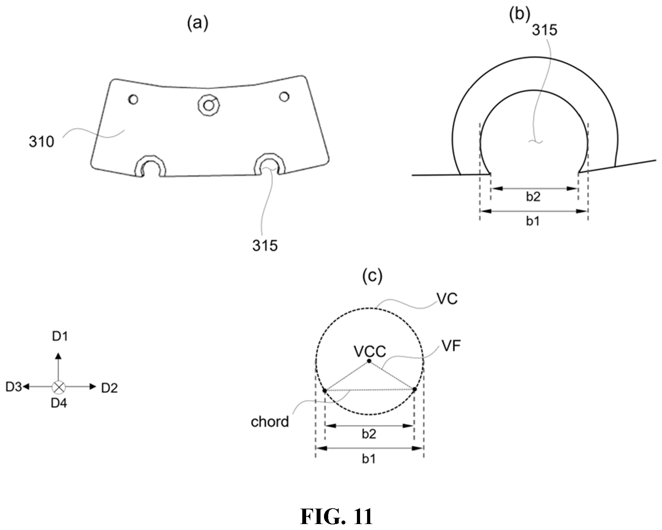

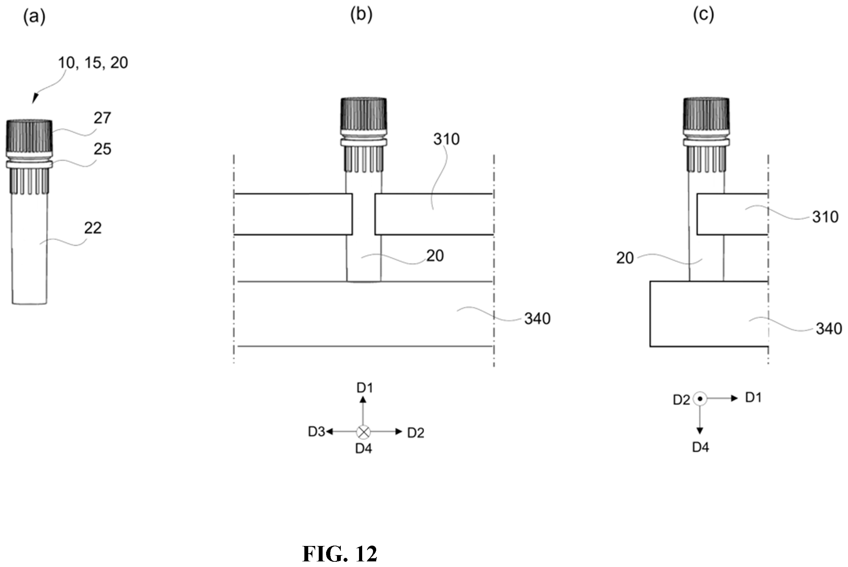

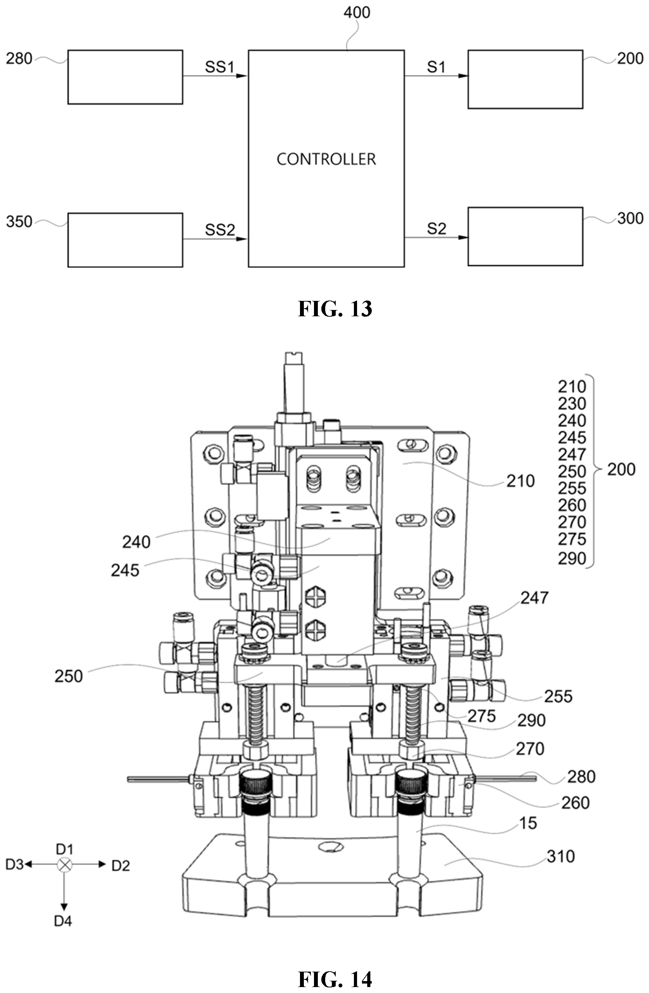

FIGS. 8, 9, and 10 are diagrams illustrating a tube transferring apparatus according to exemplary embodiments of a second invention, and FIGS. 11 and 12 are views for explaining a tube holding plate and a tube supporting plate included in the tube transferring apparatus of FIG. 8. FIG. 13 is a block diagram for describing a controller included in the tube transferring apparatus of FIG. 8. For example, FIG. 1 is a perspective view of the tube transferring apparatus, and FIG. 2 is a first side view of the tube transferring apparatus. FIG. 3 is a second side view of the tube transferring apparatus. For convenience of explanation, only part of a rotation structure of FIG. 1 is shown in FIG. 2, and the rotation structure of FIG. 1 is not shown in FIG. 3.

Referring to FIGS. 8 to 13, a tube transferring apparatus (refer to as 'apparatus 1000' hereinafter) may include a conveyor 110, an air blower 130, a stopper 150, a transfer structure 200, a rotation structure 300, a first detection sensor 280, a second detection sensor 350, a controller 400, etc. Here, the rotation structure 300 may include a tube holding plate 310, a tube support plate 340, and a rotation table 330, and a through-hole 315 may be formed in the tube holding plate 310. In addition, the transfer structure 200 may include a fixed body 210, a moving unit 230, a connection member 240, a first connection unit 245, a piston member 247, a moving plate 250, a second connection unit 255, a transfer member 260, a support member 270, a fixing member 277, a guide staff 275, an elastic member 290, etc. The transfer member 260 may include a first transfer panel 261 and a second transfer panel 262. Further, a step portion 263 and a recess portion 268 may be formed in the transfer member 260, and an opening 265 may be formed in the first transfer panel 261. A detailed description of the first detection sensor 280 and the transfer structure 200 will be described below with reference to FIGS. 14 to 18. In exemplary embodiments, the controller 400 may generate a first signal S1 and a second signal S2, and the controller 400 may control operations of the transfer structure 200 and the rotation structure 300 based on the first signal S1 and the second signal S2.

The apparatus 100 may correspond to a tube transferring apparatus implemented to perform a second capping process and a vision inspection on the tube after a first capping process is performed on the tube by a first capping process device.

For convenience of explanation, when the tube is located on the conveyor 110, the tube is defined as a tube 10. When the tube is located on the transfer structure 200, the tube is defined as a tube 15. When the tube is located on the rotation structure 300, the tube is defined as a tube 20. That is, each of the tubes 10, 15, and 20 may have the same shape. In addition, each of the tubes 10, 15, and 20 may include a cylindrical body 22, and a protrusion 25 may be formed on a side surface (e.g., a neck) of the body 22. Each of the tubes 10, 15, and 20 may further include a cap 27, and the body 22 may be sealed with the cap 27. Further, a liquid solution may be contained in the body 22 (refer to FIG. 12).

For example, as illustrated in FIGS. 8, 9, and 10, the tube that has undergone the first capping process may be fed to the conveyor 110, and the conveyor 110 may feed the tube 10 in a rightward direction (e.g., a first direction D1). After the tube 10 is provided from the conveyor 110 to the transfer structure 200, the transfer structure 200 may move downward while supporting the tube 15. In other words, the transfer structure 200 may move the tube 15 in a down direction (e.g., a fourth direction D4). After the transfer structure 200 moves downward, the transfer structure 200 may provide the tube 15 to the rotation structure 300, and the tube 20 may be positioned on the rotation structure 300.

In addition, a second capping device may be positioned adjacent to the rotation structure 300 of the apparatus 100 to perform the second capping process. Further, a vision inspection device may be positioned adjacent to the rotation structure 300 of the apparatus 100 to perform the vision inspection on the tube that has undergone the second capping process. For example, while the tube 15 provided from the transfer structure 200 is rotated counterclockwise by the rotation structure 300, the tube 15 may be positioned adjacent to the second capping device and the vision inspection device, and after the second capping process and the vision inspection are performed, the tube 15 may be moved to another device via a robotic arm.

Referring again to FIGS. 8 to 10, the conveyor 110 may extend in the first direction D1, and the tube 10 may be fed in the first direction D1 through the conveyor 110. For example, after the first capping process is performed, a tube having a partially sealed cap may be provided to an input section of the conveyor 110 manually or via a robotic arm. The tube 10 provided to the input section of the conveyor 110 may be fed to an output section of the conveyor 110 along the first direction D1. An upper surface of the conveyor 110 facing a lower surface of the tube 10 may be parallel to a ground, and the upper surface of the conveyor 110 may face the lower surface of the tube 10 so that the tube 10 is in an upright state. In exemplary embodiments, the conveyor 110 may be a linear feeder, and the lower surface of the tube 10 and the upper surface of the conveyor 110 may be spaced apart from each other. In addition, the tube 10 may be fed through vibration of the linear feeder, and the conveyor 110 may include a vibration transmission unit to transmit the vibration to the tube 10.

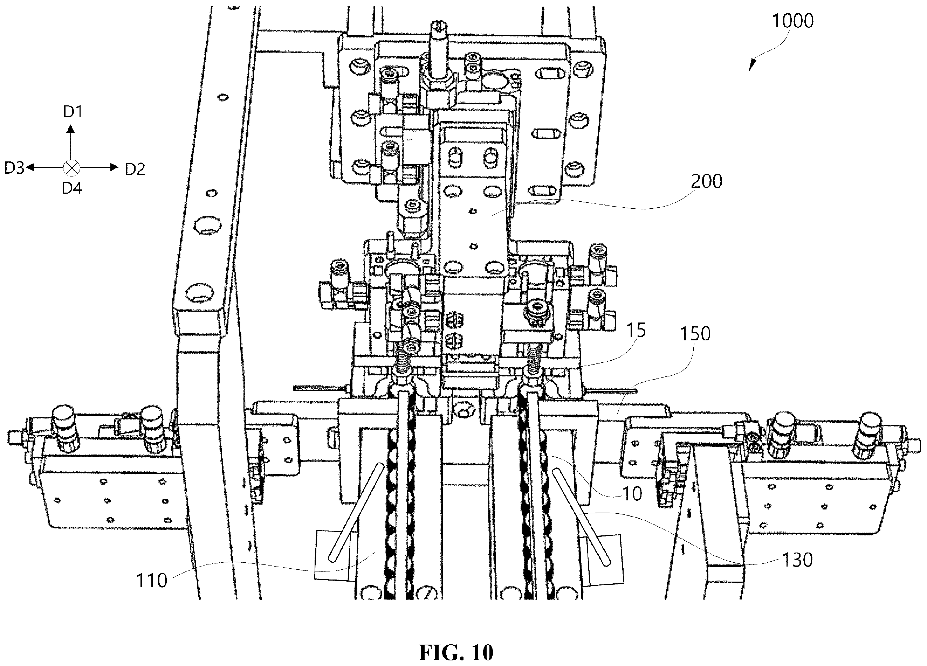

As illustrated in FIG. 10, the air blower 130 may be positioned adjacent to the output section of the conveyor 110. In other words, the air blower 130 may be fixed to a side surface of the conveyor 110, and the air blower 130 may blow air to the tube 10 positioned adjacent to the output section of the conveyor 110. In exemplary embodiments, when the tube 10 provided at the input section of the conveyor 110 moves in the first direction D1 due to the vibration of the conveyor 110 and is overlapped with the output section of the conveyor 110, the tube 10 may be provided to an input section of the transfer structure 200 (e.g., the transfer member 260 included in the transfer structure 200) by the air discharged from the air blower 130. Here, the transfer structure 200 and the conveyor 110 may be positioned adjacent to each other, and the output section of the conveyor 110 and the input section of the transfer structure 200 may face each other. For example, the tube 10 positioned at the output section of the conveyor 110 may vibrate in place or be relatively slowly fed. In such a case, when the relatively slowly fed tube 10 is overlapped with the output section, the air blower 130 discharges the air to the cap 27 of the relatively slowly fed tube 10, so that the tube 10 may be relatively quickly fed to the input section of the transfer structure 200.

The stopper 150 may be disposed adjacent to the output section of the conveyor 110. The stopper 150 may operate in an open state and a closed state. In the open state of the stopper 150, a tube 10 adjacent to (or in contact with) the stopper 150 among the tubes 10 positioned adjacent to the output section of the conveyor 110 may be provided to the input section of the transfer structure 200 (or to the recess portion 268 of the transfer member 260). In the closed state of the stopper 150, a tube 10 adjacent to the stopper 150 among the tubes 10 positioned adjacent to the output section of the conveyor 110 may not be provided to the input section of the transfer structure 200. For example, the stopper 150 may be manufactured using plastic.

Referring again to FIGS. 8 and 11 to 13, the rotation structure 300 may be positioned under the conveyor 110 and the transfer structure 200. The tube 15 released from the transfer structure 200 may be provided to the second capping device and the vision inspection device.

The rotation table 330 may have a substantially circular shape and may rotate on a plane. For example, the rotation structure 300 may further include an index motor, and the rotation table 330 connected to the index motor may rotate in a counterclockwise direction (or a clockwise direction). For example, the rotation table 330 may be manufactured using a metal, an alloy, metal nitride, etc.

The tube holding plate 310 may be positioned at an outer portion of the rotation table 330, and the through-hole 315 of the tube holding plate 310 may be located adjacent to the output section of the conveyor 110. In other words, as the rotation table 330 rotates, the tube holding plate 310 fixed to the rotation table 330 may also rotate. As illustrated in FIGS. 11 and 12, the through-hole 315 formed in the tube holding plate 310 may be located at the radially outermost portion of the tube holding plate 310, and at least a part of the through-hole 315 may be open to an outside. In exemplary embodiments, a length b2 of the portion of the through-hole 315 that is open to the outside may be smaller than a diameter b1 of the through-hole 315. In other words, as illustrated in FIG. 11C, the length b2 of a chord of a virtual fan shape VF defined by the portion of the through-hole 315 that is open to the outside may be shorter than the diameter b1 of a virtual circle VC defined by the through-hole 315. Here, a center of the virtual circle VC is denoted as a middle point VCC. That is, when the tube 20 is provided in the through-hole 315, a side surface of the tube 20 may be exposed in a direction opposite to the first direction D1. Alternatively, when the tube 20 is provided in the through-hole 315, at least a part of the side surface of the tube 20 may be protruded from a side surface of the tube holding plate 310. The tube holding plate 310 may include a plastic such as acetal, mono cast nylon, polyether ether ketone (PEEK), polyacrylether ketone (PAEK), polyether imide (PEI), or polyether sulfone (PES). For example, the tube holding plate 310 may be manufactured using mono cast nylon.

Referring again to FIGS. 8 and 12, the tube support plate 340 may be disposed under the tube holding plate 310, and the tube support plate 340 may be in a fixed state. In addition, the tube support plate 340 may also be overlapped with the through-hole 315 of the tube holding plate 310, and the tube support plate 340 may support a lower surface of the tube 20 provided in the through-hole 315 of the tube holding plate 310. When the rotation table 330 is rotated after the tube 20 is provided in the through-hole 315, the tube 20 may be moved while the tube 20 is slid in a state where the lower surface of the tube 20 is in contact with an upper surface of the tube support plate 340. The tube support plate 340 may include a plastic. For example, in order to relatively reduce a friction with the tube 20, the tube support plate 340 may be manufactured using a plastic having a relatively low friction. In other exemplary embodiments, the rotation structure 300 may be configured such that the tube support plate 340 together with the tube holding plate 310 is integrally rotated while the tube support plate 340 supports the tube 20 under the tube holding plate 310. In such a case, since the tube support plate 340 together with the tube holding plate 310 is integrally rotated, the tube 20 provided in the through-hole 315 of the tube holding plate 310 may be moved in a state where the tube 20 is supported on the upper surface of the tube support plate 340 without sliding.

For example, in a conventional rotation structure, a solution is contained in a tube. When a portion where at least a part is open to the outside is not formed in a through-hole of a tube holding plate, the highest point of the solution may be overlapped with the side surface of the tube holding plate. In such a case, in the vision inspection that is subsequently performed, the vision inspection device may not detect the solution contained in the tube (e.g., the vision inspection device is positioned adjacent to the side surface of the tube). To solve this issue, the tube holding plate 310 of the second invention includes a portion where at least a part of the through-hole 315 is open to the outside, such that even when the highest point of the solution contained in the tube 20 is overlapped with the side surface of the tube holding plate 310, the vision inspection device may detect the highest point of the solution through the portion where at least a part of the through-hole 315 is open to the outside.

In addition, in a conventional rotation structure, a solution may be contained in the tube. When a portion where at least a part is open to the outside is formed in the through-hole of the tube holding plate, a guide member surrounding an outer portion of the tube holding plate may be positioned so that the tube is not released to the outside due to a centrifugal force as the rotation table rotates. In such a case, the manufacturing cost may be increased due to the guide member. To solve this issue, the tube holding plate 310 of the second invention may be manufactured such that the length b2 of the portion where at least a part of the through-hole 315 is open to the outside is smaller than the diameter b1 of the through-hole 315. In this case, even if the rotation table 330 rotates, the tube 20 provided in the through-hole 315 may not be released to the outside due to centrifugal force, without the guide member.

In exemplary embodiments, the tube holding plate 310 may include first to (n)th (where n is an integer of 2 or more) tube holding plates 310. First to (n)th through-holes 315 may be formed in the first to (n)th tube holding plates 310, respectively. The first to (n)th tube holding plates 310 may be fixed to an outer portion of the rotation table 330. In other words, the first to (n)th tube holding plates 310 may be sequentially arranged along an arc of the rotation table 330. The rotation table 330 may be rotated so that the first to (n)th through-holes 315 are sequentially positioned adjacent to the output section of the conveyor 110. As the tube support plate 340 supports the lower surface of each of the tubes 20 provided in the first to (n)th through-holes 315 of the first to (n)th tube holding plates 310, the tubes 20 provided in the first to (n)th through-holes 315 may be positioned at the substantially same level. Alternatively, at least two through-holes 315 may be formed in one tube holding plate 310.

As illustrated in FIG. 8, the second detection sensor 350 may be positioned at a portion adjacent to the output section of the conveyor 110 on the rotation table 330. In other words, the second detection sensor 350 may face the output section of the conveyor 110. The second detection sensor 350 may detect the tube 20 provided in the through-hole 315 of a tube holding plate 310, which is adjacent to the output section of the conveyor 110, among the first to (n)th tube holding plates 310. For example, the second detection sensor 350 may be a laser detection sensor that detects presence or absence of the tube 20 provided in the through-hole 315 of the tube holding plate 310 adjacent to the output section of the conveyor 110.

In exemplary embodiments, a first tube holding plate 310 among the first to (n)th tube holding plates 310 may be positioned under the transfer structure 200, and a tube 20 may be provided in a first through-hole 315 of the first tube holding plate 310 by the transfer structure 200. The second detection sensor 350 may detect the tube 20 positioned in the first through-hole 315, and a second detection signal SS2 may be provided to the controller 400. When the controller 400 receives the second detection signal SS2, the controller 400 may rotate the rotation table 330 by a predetermined angle based on a second signal S2, so that a second tube holding plate 310 among the first to (n)th tube holding plates 310 may be positioned under the transfer structure 200. In other words, the controller 400 may control the rotation structure 300 so that a second through-hole 315 among the first to (n)th through-holes 315 is positioned under the transfer structure 200 based on the second signal S2.

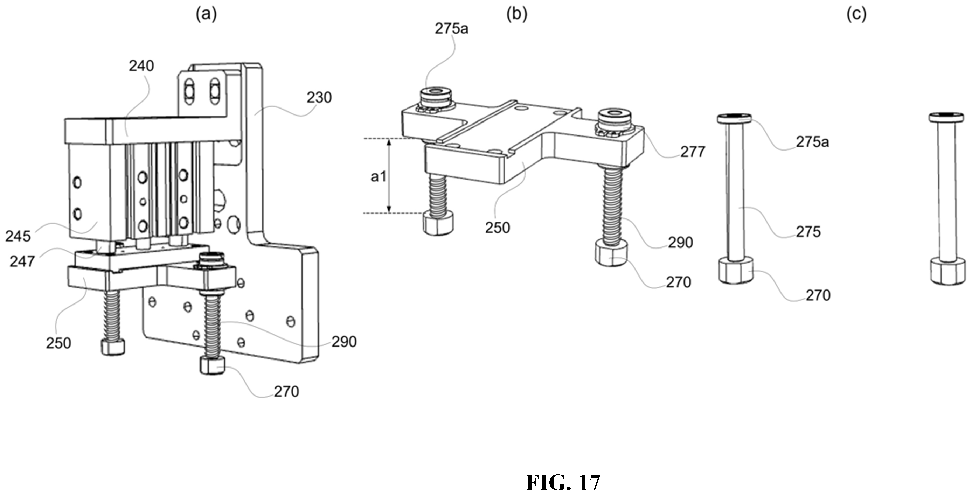

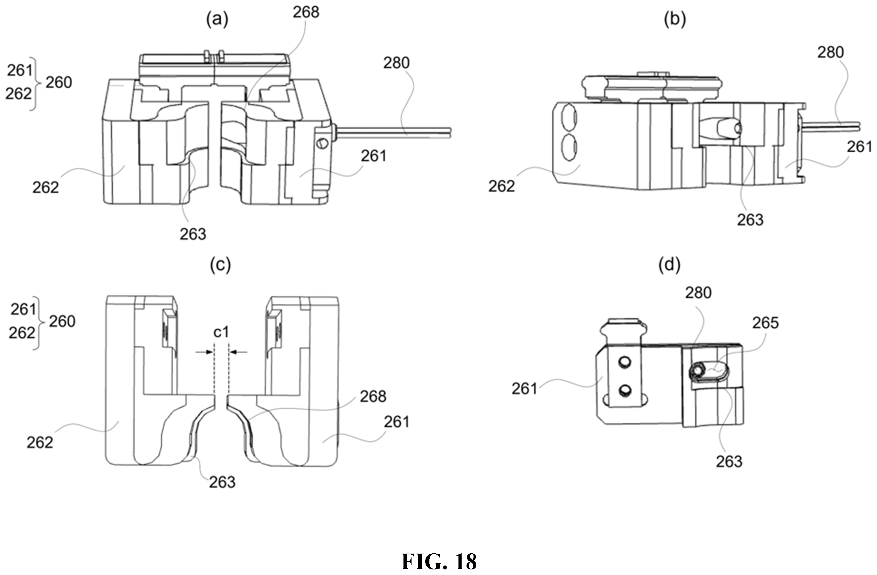

FIGS. 14, 15, and 16 are partial enlarged views illustrating a transferring structure and the tube holding plate included in the tube transferring apparatus of FIG. 8, and FIG. 17 is an exploded perspective view for describing the transferring structure of FIG. 14. FIG. 18 is a diagram for describing a transfer member included in the transferring structure of FIG. 14.

Referring to FIGS. 13 to 18, as described above, the transfer structure 200 may include the fixed body 210, the moving unit 230, the connection member 240, the first connection unit 245, the piston member 247, the moving plate 250, the second connection unit 255, the transfer member 260, the support member 270, the fixing member 277, the guide staff 275, the elastic member 290, etc, and the transfer member 260 may include the first transfer panel 261 and the second transfer panel 262. In addition, the step portion 263 and the recess portion 268 may be formed in the transfer member 260, and the opening 265 may be formed in the first transfer panel 261. Further, the first detection sensor 280 may be positioned in the opening 265 of the first transfer panel 261.

The transfer structure 200 may be positioned adjacent to the output section of the conveyor 110 on the rotation structure 300. The tube 10 released to the output section of the conveyor 110 may be provided to the rotation structure 300 through the transfer structure 200.

The fixed body 210 may be provided. The fixed body 210 may be fixed to a portion of the apparatus 100.

The moving unit 230 may be connected to one side surface of the fixed body 210, and the moving unit 230 may move in up-down directions (e.g., the fourth direction D4 and a direction opposite to the fourth direction D4) on one side surface of the fixed body 210. For example, a first side surface of the moving unit 230 may face the connection member 240, and a second side surface of the moving unit 230 may face the fixed body 210. The moving unit 230 may be manufactured using a metal, an alloy, metal nitride, etc.

The connection member 240 may be fixed to a first portion of the first side surface of the moving unit 230, and may extend in a direction perpendicular to the first side surface of the moving unit 230 (e.g., a direction opposite to the first direction D1). For example, the connection member 240 may include a fixing part and an extending part, and the fixing part of the connection member 240 may be fixed to the moving unit 230. The extending part of the connection member 240 may extend in the direction opposite to the first direction D1 from the fixing part. In exemplary embodiments, when the moving unit 230 moves in the up-down directions, the connection member 240 and the moving unit 230 may be integrally moved since the connection member 240 is fixed to the moving unit 230. The connection member 240 may be manufactured using a metal, an alloy, metal nitride, etc.

The first connection unit 245 may be fixed to a lower surface of the connection member 240. In other words, the first connection unit 245 may be fixed to a lower surface of the extending part of the connection member 240. The first connection unit 245 may be spaced apart from the first side surface of the moving unit 230. In exemplary embodiments, when the moving unit 230 moves in the up-down directions, the moving unit 230, the connection member 240, and the first connection unit 245 may be integrally moved since the first connection unit 245 is fixed to the connection member 240.

The piston member 247 may be positioned under the first connection unit 245, and may move in the up-down directions from a lower surface of the first connection unit 245. For example, one side of the piston member 247 may be connected to the first connection unit 245, and the other side of the piston member 247 may be connected to the moving plate 250. That is, the piston member 247 may be connected to the moving plate 250 so that the moving plate 250 is movable in the up-down directions. In exemplary embodiments, when the moving unit 230 moves in the up-down directions, the moving unit 230, the connection member 240, the first connection unit 245, and the piston member 247 may be integrally moved since the piston member 247 is connected to the first connection unit 245. In addition, the piston member 247 may be independently moved in the up-down directions regardless of a movement of the moving unit 230.

The moving plate 250 may be positioned on the transfer member 260, and the moving plate 250 may be fixed to the piston member 247. The moving plate 250 may be moved in the up-down directions on the transfer member 260 through the piston member 247. In other words, an upper surface of the moving plate 250 may face the lower surface of the first connection unit 245, and may be moved in the up-down directions from the lower surface of the connection member 240. For example, the moving plate 250 may be spaced apart from the first connection unit 245 and the second connection unit 255. Openings may be formed at both lateral portions of the moving plate 250. In exemplary embodiments, when the moving unit 230 is moved in the up-down directions, the moving unit 230, the connection member 240, the first connection unit 245, the piston member 247, and the moving plate 250 may be integrally moved since the moving plate 250 is connected to the piston member 247 and the first connection unit 245. In addition, since the moving plate 250 is connected to the piston member 247, the moving plate 250 may be moved in the up-down directions depending on a movement of the piston member 247 regardless of the movement of the moving unit 230.

As illustrated in FIG. 17, the fixing member 277 may be positioned in the opening of the moving plate 250, and the fixing member 277 may be fixed to the opening of the moving plate 250. An opening may be formed in the fixing member 277, and the fixing member 277 may have a hollow cylindrical shape. The guide staff 275 may be positioned in the opening of the fixing member 277, and the guide staff 275 may have a cylindrical shape. A first end of the guide staff 275 may pass through the opening of the fixing member 277, and may be connected to the support member 270. A second end 275a of the guide staff 275 may have a cylindrical shape with a diameter larger than a diameter of the opening of the fixing member 277. For example, the second end 275a of the guide staff 275 may be in contact with an upper surface of the fixing member 277. In other words, the second end 275a of the guide staff 275 may not be positioned inside the opening of the fixing member 277 (or the opening of the moving plate 250), and when the support member 270 moves in a direction opposite to the fourth direction D4 (e.g., the up direction), the second end 275a of the guide staff 275 may be spaced apart from the upper surface of the fixing member 277 in a state where the fixing member 277 is fixed to the moving plate 250 in the opening of the moving plate 250. In exemplary embodiments, when the moving unit 230 is moved in the up-down directions, the moving unit 230, the connection member 240, the first connection unit 245, the piston member 247, the moving plate 250, and the fixing member 277 may be integrally moved since the fixing member 277 is fixed to the opening of the moving plate 250. In addition, since the moving plate 250 is connected to the piston member 247, the fixing member 277 together with the moving plate 250 may be moved in the up-down directions depending on the movement of the piston member 247, regardless of the movement of the moving unit 230.

As illustrated in FIG. 17, the support member 270 may be spaced apart from a lower surface of the moving plate 250 by a predetermined distance a1, and the support member 270 may be fixed to the first end of the guide staff 275. A diameter of the support member 270 may be greater than a diameter of the first end of the guide staff 275. A lower surface of the support member 270 may be selectively in contact with an upper surface of a tube 15 positioned on the transfer member 260. When the lower surface of the support member 270 is in contact with the upper surface of the tube 15 positioned on the transfer member 260, the support member 270 may press the tube 15 positioned on the transfer member 260 in the fourth direction D4. When the support member 270 presses the tube 15 positioned on the transfer member 260 in the fourth direction D4, a second end 275a of the guide staff 275 may be spaced apart from the upper surface of the fixing member 277. In this case, the predetermined distance al where the upper surface of the support member 270 is spaced apart from the lower surface of the moving plate 250 may be reduced. The support member 270 may be manufactured using plastic.

The elastic member 290 may be disposed on the outer portion of the guide staff 275. In other words, the guide staff 275 may be positioned in an inside of the elastic member 290, and the guide staff 275 may guide the elastic member 290 so that the elastic member 290 is not released to the outside. One side of the elastic member 290 may be in contact with the upper surface of the support member 270, and the other side of the elastic member 290 may be in contact with the lower surface of the moving plate 250. That is, the elastic member 290 may be positioned between the moving plate 250 and the support member 270, and while the support member 270 does not contact the tube 15 positioned on the transfer member 260, the elastic member 290 may maintain a predetermined distance al between the moving plate 250 and the support member 270. In exemplary embodiments, after the transfer member 260 supports the tube 10 released from the output section of the conveyor 110 through the step portion 263, the moving plate 250 is moved downward, and as the lower surface of the support member 270 presses the upper surface of the tube 15, the elastic member 290 may be compressed so that the predetermined distance a1 is reduced.

The elastic member 290 may include a compression spring. For example, the compression spring may be an open-coiled helical spring that provides a resistance to a compressive force applied in an axial direction (e.g., the up-down directions). In exemplary embodiments, when the moving unit 230 moves in the up-down directions, the moving unit 230, the connection member 240, the first connection unit 245, the piston member 247, the moving plate 250, the fixing member 277, the support member 270, the guide staff 275, and the elastic member 290 may be integrally moved since the support member 270, the guide staff 275, and the elastic member 290 are connected to the moving plate 250. In addition, the fixing member 277, the support member 270, the guide staff 275, and the elastic member 290 together with the moving plate 250 may be moved in the up-down directions depending on the movement of the piston member 247, regardless of the movement of the moving unit 230 since the moving plate 250 is connected to the piston member 247.

The second connection unit 255 may be fixed to a second portion of the first side of the moving unit 230. The second connection unit 255 may connect the moving unit 230 and the transfer member 260. In exemplary embodiments, when the moving unit 230 is moved in the up-down directions, the moving unit 230, the connection member 240, the first connection unit 245, the piston member 247, the moving plate 250, the fixing member 277, the support member 270, the guide staff 275, the elastic member 290, and the second connection unit 255 may be integrally moved, since the second connection unit 255 is fixed to the moving unit 230.

The transfer member 260 may be positioned adjacent to the output section of the conveyor 110 on the rotation structure 300. The transfer member 260 may be connected to the second connection unit 255.

As illustrated in FIG. 18, the recess portion 268 that is recessed inward from a first side of the transfer member 260 may be formed in the transfer member 260. For example, a shape of the recess portion 268 may correspond to a shape of an outer portion of the tube 15. The recess portion 268 of the transfer member 260 may face the output section of the conveyor 110, and the step portion 263 of the transfer member 260 may be formed in the recess portion 268 of the transfer member 260. In addition, the step portion 263 of the transfer member 260 may support the tube 15 released from the output section of the conveyor 110. For example, the protrusion 25 of the tube 15 may be supported by the step portion 263 of the transfer member 260.

As described above, the transfer member 260 may include the first transfer panel 261 and the second transfer panel 262. The first transfer panel 261 may include a first step portion formed on an inner side surface, and an opening 265 that penetrates from an outer side surface to the first step portion may be formed in the first transfer panel 261. The second transfer panel 262 may include a second step portion formed on an inner side surface. Here, the first step portion and the second step portion may be defined as the step portion 263 of the transfer member 260. In exemplary embodiments, after the tube 10 released from the output section of the conveyor 110 is provided to the transfer member 260, the control unit 400 may control the transfer structure 200 so that the first and second transfer panels 261 and 262 are positioned adjacent to each other so as to support the tube 15 through the transfer member 260 while the transfer structure 200 moves the tube 15 downward. In exemplary embodiments, as illustrated in FIG. 18, the first and second transfer panels 261 and 262 may be spaced apart by a first distance c1. For example, when the first and second transfer panels 261 and 262 are in contact with each other, wear may occur at the contact surfaces of the first and second transfer panels 261 and 262, so the first and second transfer panels 261 and 262 may be spaced apart by the first distance c1. In other exemplary embodiments, the distance between the first and second transfer panels 261 and 262 may be spaced apart by a distance relatively smaller than the first distance c1, and then the transfer member 260 may press the side surface of the protrusion 25 of the tube 15 and/or a side surface of the cap 27 of the tube 15 while the transfer member 260 supports the protrusion 25 of the tube 15. In other words, the transfer member 260 may grip the tube 15 so that the tube 15 does not move while the transfer member 260 supports the tube 15. In such a case, since the transfer member 260 grips the tube 15, the support member 270, which functions to prevent the tube 15 from moving while the transfer member 260 moves the tube 15 downward, may be omitted.

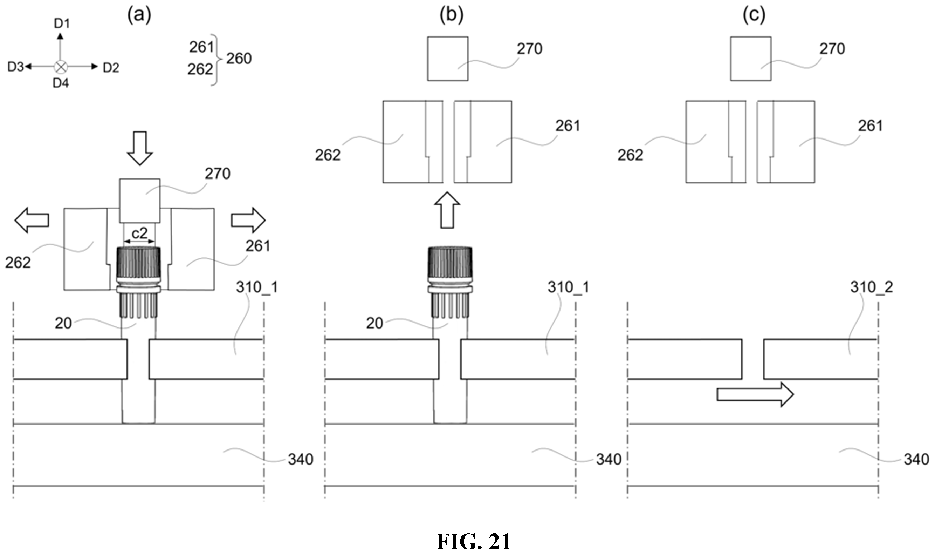

In addition, after the transfer member 260 moves the tube 15 downward, the control unit 400 may control the transfer structure 200 so that the first and second transfer panels 261 and 262 are spaced apart from the tube 15 to release the tube 15 to the through-hole 315 of the tube holding plate 310 through the transfer member 260. In exemplary embodiments, as illustrated in FIG. 21, the first and second transfer panels 261 and 262 may be spaced apart by a second distance c2 along left-right directions (e.g., a lateral direction). For example, the first and second transfer panels 261 and 262 may be spaced apart by the second distance c2 greater than the first distance c1 to release the tube 15. The transfer member 260 may include a metal, an alloy, metal nitride, etc. For example, the transfer member 260 may include metallic materials such as gold (Au), silver (Ag), aluminum (Al), iron (Fe), zinc (Zn), lead (Pb), tungsten (W), copper (Cu), platinum (Pt), nickel (Ni), titanium (Ti), palladium (Pd), magnesium (Mg), calcium (Ca), lithium (Li), chromium (Cr), tantalum (Ta), molybdenum (Mo), scandium (Sc), neodymium (Nd), iridium (Ir), etc, the alloys such as aluminum-containing alloy, silver-containing alloy, copper-containing alloy, molybdenum-containing alloy, etc, and the metal nitrides such as aluminum nitride (AlNₓ), tungsten nitride (WNₓ), titanium nitride (TiNₓ), chromium nitride (CrNₓ), tantalum nitride (TaNₓ), etc.

The first detection sensor 280 may be positioned at the opening 265 of the first transfer panel 261. In other words, the first detection sensor 280 may be fixed to the opening 265 of the first transfer panel 261. The first detection sensor 280 may detect the tube 15 provided at the step portion 263 of the transfer member 260. For example, the first detection sensor 280 may be a laser detection sensor that detects presence or absence of the tube 15 positioned at the step portion 263 of the transfer member 260. In exemplary embodiments, when the moving unit 230 moves in the up-down directions, the moving unit 230, the connection member 240, the first connection unit 245, the piston member 247, the moving plate 250, the fixing member 277, the support member 270, the guide staff 275, the elastic member 290, the second connection unit 255, the transfer member 260, and the first detection sensor 280 may be integrally moved since the first detection sensor 280 is fixed to the opening 265 of the first transfer panel 261 and the transfer member 260 is connected to the second connection unit 255.

In exemplary embodiments, when the tube 10 released from the output section of the conveyor 110 is provided to the transfer member 260, the first detection sensor 280 may detect the tube 15 positioned in the recess portion 268 of the transfer member 260, and a first detection signal SS1 may be provided to the controller 400. When the controller 400 receives the first detection signal SS1, the controller 400 may control the transfer structure 200 based on a first signal S1 so that the tube 15 is provided to the through-hole 315 of the tube holding plate 310 by being moved downward in a state where the tube 15 is supported through the step portion 263 of the transfer member 260.

In exemplary embodiments, after the tube 10 released to the output section of the conveyor 110 is provided to the transfer member 260, the moving plate 250 may be moved downward through the piston member 247 so that the support member 270 may be in contact with the upper surface of the tube 15, and as the moving unit 230 is moved downward in a state where the support member 270 is in contact with the upper surface of the tube 15, the tube 15 may be moved downward. After the tube 15 is moved downward, the transfer member 260 may be spaced apart from the tube 15, and as the support member 270 is moved downward by the elastic force of the elastic member 290, the tube 15 may be provided to the through-hole 315 of the tube holding plate 310.

For example, in a conventional automated production system, a solution may be contained in a tube, and a first capping process of capping a cap onto the tube may be performed. After the first capping process is performed, the tube may be provided to a tube feeding device of a side belt type, and the tube may be moved to an output section of the tube feeding device. The tube released from the output section of the tube feeding device may be provided to a groove of a turntable rotated by an index motor in order to perform a second capping process. In this case, the output section of the tube feeding device and the groove of the turntable may be positioned at the same level. In other words, while the tubes are continuously pushed in a direction from the tube feeding device to the turntable through the side belt of the tube feeding device, and the turntable rotates, and a tube that is in contact with the turntable among the tubes may be provided to the groove of the turntable. In such a process, during the rotation of the turntable, due to a friction between the turntable and the tube, the tube may be worn and particles may be generated. In this case, a jamming phenomenon of the tubes may occur due to the particles, and the tube may be broken or a failure of the turntable may be caused. To solve this issue, the conveyor 110 and the rotation structure 300 may be positioned at different levels through the transfer structure 200 of the second invention. In other words, as the tube 10 positioned at the output section of the conveyor 110 is spaced apart from the tube holding plate 310, the tube 10 may not be worn.

As illustrated in FIG. 13, the controller 400 may generate the first signal S1 based on the first detection signal SS1, and may generate the second signal S2 based on the second detection signal SS2. In addition, the controller 400 may control the transfer structure 200 and the rotation structure 300, respectively, based on the first signal S1 and the second signal S2. In exemplary embodiments, the controller 400 may control the transfer structure 200 such that the tube 15 is provided to the through-hole 315 of the tube holding plate 310 by moving downward in a state where which the tube 15 is supported by the step portion 263 of the transfer member 260 and in a state where the support member 270 is in contact with the upper surface of the tube 15 based on the first signal S1, and may control the rotation structure 300 such that the rotary table 330 is rotated at a predetermined angle after the tube 20 is provided to the tube holding plate 310 based on the second signal S2.

As the apparatus 100 according to exemplary embodiments of the second invention includes the controller 400 and the transfer structure 200, the apparatus 100 may provide the tube 10 to the through-hole 315 of the tube holding plate 310 by moving downward the tube 10 released from the output section of the conveyor 110. In this case, since the rotating tube holding plate 310 and the tube 10 positioned at the output section of the conveyor 110 are not in contact with each other, the tube 10 may not be worn. Accordingly, as particles are not generated due to the wear of the tube 10, a jamming phenomenon of the tube 10 and a failure of the rotation structure 300 may not occur.

In addition, as the apparatus 100 includes the controller 400 and the rotation structure 300, the tube holding plate 310 may be manufactured such that a length b2 of the chord of the virtual fan shape VF defined by the portion where at least a part of the through-hole 315 is opened to the outside is shorter than the diameter b1 of the virtual circle VC defined by the through-hole 315. In this case, since the tube 20 provided in the through-hole 315 of the tube holding plate 310 is not released to the outside by a centrifugal force even when the rotation table 330 rotates, a guide member surrounding an outer portion of the tube holding plate 310 may not be installed. Accordingly, a cost of the apparatus 100 may be relatively reduced.

Further, the tube holding plate 310 may include the portion where at least a part of the through-hole 315 is opened to the outside. Accordingly, even if the highest point of the solution contained in the tube 20 is overlapped with the side surface of the tube holding plate 310, the vision inspection device may detect the highest point of the solution through the portion where at least a part of the through-hole 315 is opened to the outside.

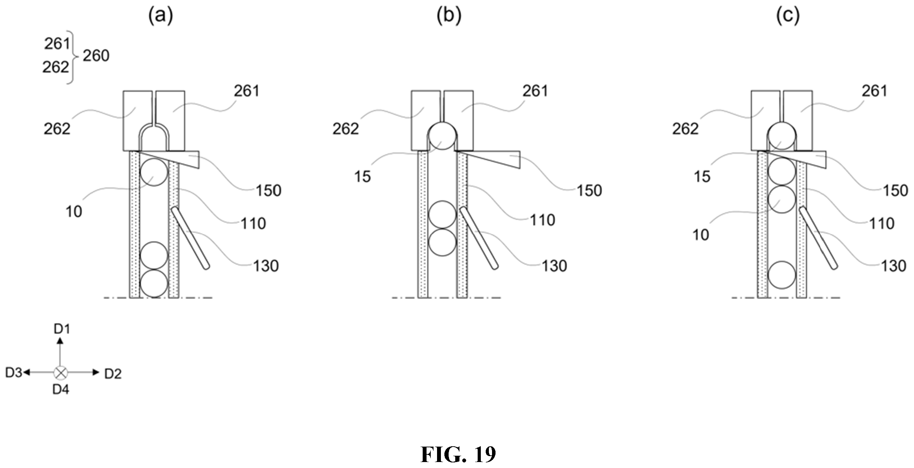

FIGS. 19 to 21 are schematic diagrams illustrating a method of transferring a tube by the tube transferring apparatus according to exemplary embodiments of the second invention.

Referring to FIG. 19a, after a first capping process is performed, a tube where a cap is partially sealed may be provided to an input section of a conveyor 110 manually or through a robot arm. The tube 10 provided to the input section of the conveyor 110 may be fed to an output section of the conveyor 110 along a first direction D1.

The stopper 150 is in a closed state, and in the closed state of the stopper 150, a tube 10 adjacent to a stopper 150 among the tubes 10 positioned adjacent to the output section of the conveyor 110 may not be provided to a transfer member 260.

Referring to FIG. 19b, the stopper 150 is in an open state, and the tube 10 may be provided to the transfer member 260 by air discharged from an air blower 130.

Referring to FIG. 19c, after the tube 15 is provided to the transfer member 260, the stopper 150 may be in the closed state.

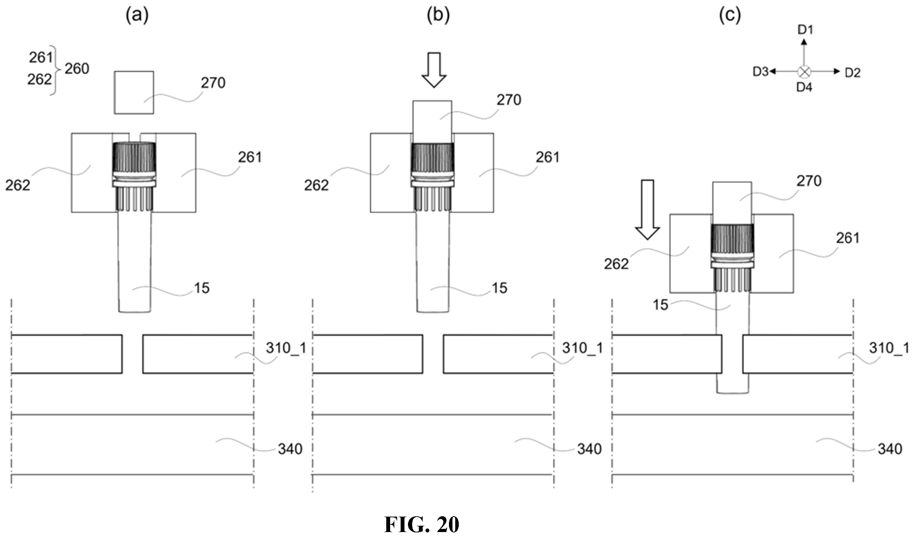

Referring to FIGS. 18 and 20a, a support member 270 may be spaced apart from a lower surface of a moving plate 250 by a predetermined distance a1, and a first detection sensor 280 may detect a presence of a tube 15 positioned at a step portion 263 of a transfer member 260.

Referring to FIGS. 17 and 20b, when the first detection sensor 280 detects the presence of the tube 15 positioned at the step portion 263 of the transfer member 260, the support member 270 may be in contact with an upper surface of the tube 15 by moving downward the moving plate 250 through a piston member 247. In this case, the tube 15 may be pressed with a predetermined force by the support member 270, and an elastic member 290 is compressed, so that a predetermined distance a1 may be reduced.

Referring to FIGS. 11, 17, and 20c, as the moving unit 230 is moved downward in a state where the support member 270 is in contact with the upper surface of the tube 15, the tube 15 may be moved downward. In this case, at least a part of the tube 15 may be overlapped with a through-hole 315 of a first tube holding plate 310_1.

Referring to FIGS. 11 and 20a, after the tube 15 is moved downward, the transfer member 260 may be spaced apart from the tube 15, and as the support member 270 is moved downward by an elastic force of the elastic member 290, the tube 15 may be provided to the through-hole 315 of a tube holding plate 310.

Referring to FIGS. 8, 11, 17, and 20b, after the tube 20 is provided to the through-hole 315 of the first tube holding plate 310_1, the transfer member 260 and the support member 270 may also be moved upward as the moving unit 230 is moved upward.

Ahe second detection sensor 350 may detect the tube 20 positioned in the through-hole 315 of the first tube holding plate 310_1.

Referring to FIGS. 8, 11, 17, and 21c, after the second detection sensor 350 detects the tube 20 positioned in the through-hole 315 of the first tube holding plate 310_1, the rotation table 330 may be rotated by a predetermined angle, so that a second tube holding plate 310_2 is positioned under the transfer member 260. In this case, the tube 20 may be moved in a state where a lower surface of the tube 20 positioned in the through-hole 315 of the first tube holding plate 310_1 is in contact with an upper surface of the tube support plate 340.

As described above, although exemplary embodiments of the first and second inventions have been described with reference to the above, those of ordinary skill in the art will understand that the first and second inventions may be variously modified and changed without departing from the spirit and scope of the first and second inventions described in the following claims.

### INDUSTRIAL APPLICABILITY

The first invention may be applied to various automated facilities capable of being equipped with an apparatus for feeding a tube which feeds a tube. For example, it may be applied to automated facilities that feed a tube using a conveyor.

The second invention may be applied to various automated facilities capable of being equipped with a tube transferring apparatus which transfers a tube. For example, it may be applied to automated facilities that transfer a tube from a conveyor to a capping device and a vision inspection device.

### <Explanation of symbols>

### <First invention>

| | | | |
|---|---|---|---|
| 10: | tube | 100: | apparatus |
| 110: | plate | 115: | joint |
| 200: | guide rail | 210: | first guide rail |
| 215: | void space | 220: | second guide rail |
| 230: | input section | 240: | output section |
| 250: | guider | 260: | connector |
| 300: | controller | 310: | vibration generator |
| 320: | weight balancer | 340: | detection sensor |
| 410: | first air blower | 420: | second air blower |

### <Second invention>

| | | | |
|---|---|---|---|
| 10, 15, 20: | tube | 22: | body |
| 25: | protrusion | 27: | cap |
| 1000: | apparatus | 110: | conveyor |
| 130: | air blower | 150: | stopper |
| 200: | transfer structure | 210: | fixed body |
| 230: | moving unit | 240: | connection member |
| 245: | first connection unit | 247: | piston member |
| 250: | moving plate | 255: | second connection unit |
| 260: | transfer member | 261: | first transfer panel |
| 262: | second transfer panel | 263: | step portion |
| 265: | opening | 268: | recess portion |
| 270: | support member | 275: | guide staff |
| 277: | fixing member | 280: | first detection sensor |
| 290: | elastic member | 300: | rotation structure |
| 310: | tube holding plate | 315: | through-hole |
| 330: | rotation table | 340: | tube support plate |
| 350: | second detection sensor | 400: | controller |

## Claims

1. A tube transferring apparatus (1000) comprising:
a conveyor (110) feeding a tube (10, 15, 20);
a transfer structure (200) including a transfer member (260) positioned adjacent to an output section of the conveyor, the transfer member including a step portion (263) that is formed in an inside of the transfer member, the transfer member supporting the tube released from the output section of the conveyor through the step portion;
a rotation structure (300) positioned under the transfer structure (200), the rotation structure including a tube holding plate (310) where a through-hole (315) is formed; and
a controller (400) configured to control the transfer structure such that the tube released from the output section of the conveyor is provided to the through-hole (315) of the tube holding plate by moving down the released tube while being supported through the step portion (263).

2. The apparatus of claim 1, wherein the tube includes a protrusion formed in a side surface of the tube,
optionally wherein the protrusion of the tube is supported on the step portion of the transfer member.

3. The apparatus of claim 1 or 2, wherein a recess portion is formed in the transfer member, and the recess portion is recessed from one side surface into the inside of the transfer member, and
wherein the recess portion of the transfer member faces the output section of the conveyor, and the step portion of the transfer member is formed at the recess portion of the transfer member,
optionally wherein a shape of the recess portion corresponds to a shape of an outer portion of the tube.

4. The apparatus of one of claims 1 to 3, wherein the transfer member includes:
a first transfer panel including a first step portion formed in an inside surface of the first transfer panel; and
a second transfer panel including a second step portion formed in an inside surface of the second transfer panel, and
wherein the first and second step portions are defined as the step portion of the transfer member,
optionally wherein the controller is configured to control the transfer structure such that:
(i) the first and second transfer panels are spaced apart by a first distance so as to support the tube by using the transfer member while the transfer structure moves down the tube, after the tube released from the output section of the conveyor is provided to the transfer member; and
(ii) the first and second transfer panels are spaced apart by a second distance that is greater than the first distance along a transverse direction so as to release the tube provided to the transfer member into the through-hole of the tube holding plate, after the transfer structure moves down the tube.

5. The apparatus of claim 4, wherein an opening penetrated from an outside surface into the first step portion is formed in the first transfer panel, and
wherein the apparatus further comprises:
a detection sensor positioned in the opening of the first transfer panel, the detection sensor sensing a presence or an absence of the tube positioned in the step portion of the transfer member.

6. The apparatus of one of claims 1 to 5, wherein the transfer structure further includes:
a support member positioned on the transfer member; and
an elastic member positioned on the support member,
optionally wherein the transfer structure further includes:
a transfer plate spaced apart from the support member by a predetermined distance on the elastic member, the transfer plate being movable up and down on the transfer member, and
wherein the elastic member maintains the predetermined distance between the support member and the transfer plate.

7. The apparatus of claim 6, wherein after the transfer member supports the tube released from the output section of the conveyor through the step portion, a lower surface of the support member presses an upper surface of the tube by moving down the transfer plate, such that the elastic member is compressed, and the predetermined distance is decreased.

8. The apparatus of claim 6, wherein the transfer structure further includes:
a fixed body;
a moving unit movable up and down on one side surface of the fixed body;
a connection member fixed in a first portion of a side surface of the moving unit, the connection member being extended in a direction that is vertical to the side surface of the moving unit;
a first connection unit fixed in a lower surface of the connection member;
a piston member positioned under the first connection unit, the piston member being connected to the transfer plate such that the transfer plate is movable up and down; and
a second connection unit fixed in a second portion of the side surface of the moving unit, the second connection unit connecting the moving unit and the transfer member,
optionally wherein the transfer plate is spaced apart from the first and second connection units, and
wherein a lower surface of the first connection unit faces an upper surface of the transfer plate, and the transfer plate is movable up and down on the lower surface of the connection member.

9. The apparatus of claim 8, wherein:
after the tube released from the output section of the conveyor is provided to the transfer member, the support member is in contact with an upper surface of the tube by moving down the transfer plate through the piston member;
the moving unit is moved down while the support member is in contact with the upper surface of the tube, such that the tube is moved down; and
the transfer member is spaced apart from the tube after the tube is moved down, and the support member is moved downward by an elastic force of the elastic member, such that the tube is provided to the through-hole of the tube holding plate.

10. The apparatus of one of claims 1 to 9, wherein the rotation structure further includes:
a rotation table having a circular shape, the rotation table being rotated in a plane, and
wherein the tube holding plate includes first to (n)th tube holding plates, where n is an integer 2 or more, and first to (n)th through-holes are formed in the first to (n)th tube holding plates, respectively,
wherein the first to (n)th tube holding plates are fixed in an outer portion of the rotation table, and
wherein the rotation table is rotated such that the first to (n)th through-holes are sequentially adjacent to the output section of the conveyor,
optionally wherein the controller is further configured to control the rotation structure such that:
(i) the first tube holding plate among the first to (n)th tube holding plates is positioned under the transfer structure; and
(ii) the second through-hole among the first to (n)th through-holes is positioned under the transfer structure by rotating the rotation table at a predetermined angle, after the tube released from the transfer structure is provided to the first through-hole among the first to (n)th through-holes.

11. The apparatus of one of claims 1 to 10, wherein the through-hole formed in the tube holding plate is located in a radially outermost portion of the tube holding plate, and at least a part of the through-hole is open to an outside.

12. The apparatus of claim 11, wherein a chord length of a virtual fan shape defined by a portion where the at least a part of the through-hole is open to the outside is less than a diameter of a virtual circle defined by the through-hole, and
wherein a side surface of the tube provided to the through-hole is exposed by the portion where the at least a part of the through-hole is open to the outside.

13. The apparatus of one of claims 1 to 12, wherein the rotation structure further includes:
a tube support plate positioned under the tube holding plate, and
wherein the tube support plate supports a lower surface of the tube provided to the through-hole of the tube holding plate.

14. The apparatus of one of claims 1 to 13, further comprising:
a stopper positioned adjacent to the output section of the conveyor, the stopper being operated in an open state such that the tube positioned adjacent to the output section of the conveyor is provided to an input section of the transfer structure, the stopper being operated in a closed state such that the tube positioned adjacent to the output section of the conveyor is not provided to the input section of the transfer structure.

15. The apparatus of one of claims 1 to 14, further comprising:
an air blower positioned adjacent to the output section of the conveyor, the air blower blowing air to the tube positioned adjacent to the output section of the conveyor,
optionally wherein the tube positioned adjacent to the output section of the conveyor is provided to an input section of the transfer structure by the air discharged from the air blower.
